# EUROPEAN PATENT SPECIFICATION

(11) **EP 2 218 690 B1**
(45) Date of publication and mention of the grant of the patent: **14.08.2013**
(21) Application number: 08844154.8
(22) Date of filing: 31.10.2008
(51) Int. Cl.: C03B 23/033, C03B 35/16, C03B 23/025, C03B 27/044, C03B 27/04

(54) **BENDING APPARATUS AND BENDING METHOD FOR GLASS PANE**
VORRICHTUNG UND VERFAHREN ZUM BIEGEN VON GLASPLATTEN
APPAREIL DE CINTRAGE ET PROCÉDÉ DE CINTRAGE POUR PLAQUE DE VERRE

(30) Priority: 01.11.2007 JP 2007285484
(43) Date of publication of application: 18.08.2010
(73) Proprietor: Asahi Glass Company, Limited, Chiyoda-ku Tokyo 100-8405 (JP)
(72) Inventor: TOMIOKA, Masanori, Tokyo 100-8405 (JP); OKUDAIRA, Koji, Tokyo 100-8405 (JP)
(74) Representative: Müller-Boré & Partner Patentanwälte
(86) International application number: PCT/JP2008/069924
(87) International publication number: WO 2009/057765

(56) References cited:
- EP-A1- 1 400 495
- JP-A- 6 127 961
- JP-A- 2001 002 433
- JP-A- 2001 002 433
- JP-A- 2004 026 537
- JP-A- 2004 026 537

## Description

### TECHNICAL FIELD

The present invention relates to a bending apparatus and a bending method for a glass sheet, in particular, a bending apparatus and a bending method for a glass sheet wherein while a heated glass sheet is conveyed in a conveying direction by a roller conveyor including a plurality of rollers, respective rollers are moved in an up-down direction perpendicular to the conveying direction to form a curved plane on a conveying plane defined by the conveying rollers whereby the glass sheet on the curved plane is bent along the conveying direction.

### BACKGROUND ART

Heretofore, there has been known as disclosed in JP-A-2000-72461, a technique wherein a glass sheet, that has been heated to a glass bending temperature, is bent into a predetermined curvature while the glass sheet is conveyed by a roller conveyor including a plurality of conveying rollers. In this technique, respective conveying rollers are moved up and down during conveyance of a glass sheet, with the result that a certain curved plane is formed on a conveying plane to bend the glass sheet, and the curved plane moves in a conveying direction as the glass sheet is conveyed. In this technique, the glass sheet is bent downward by its own weight so as to follow the curved plane formed on the conveying plane while the glass sheet is conveyed on the roller conveyor. Thus, it is possible to bend a glass sheet in a desired curvature by properly controlling up-down movement of each of the rollers.

In this method for bending a glass sheet, if a glass sheet is conveyed with its actual posture deviating from a desired posture, it is not possible to bend the glass sheet into a desired shape since the curved plane is formed in the conveying direction by rollers. In order to cope with this problem, JP-A-2004-26537 has proposed a method for positioning a glass sheet, which detects the posture of a glass sheet and moves conveying rollers in contact with the glass sheet in response to the detected posture so as to correct the posture of the glass sheet to a desired posture.

Further, as a method for forming a curved plane along a conveying direction by a plurality of rollers to bend a glass sheet, there has been known, as disclosed in JP-B-5-4932, a glass sheet bending method wherein a curved plane is formed by conveying rollers arranged in such a slope shape that a glass sheet climbs along a conveying direction, and the glass sheet passes through a bending unit having this curved plane, while the glass sheet is sandwiched between opposed rollers, whereby the glass sheet is bent into a desired curvature.

Also in this glass sheet bending method, if the posture of the glass sheet is tilted from a desired posture before being conveyed into the bending unit, it is not possible to bend the glass sheet into a desired shape. In order to cope with this problem, the above-mentioned JP-A-2004-26537 and Japanese Patent No. 3345434 propose a method of detecting the posture of a glass sheet and tilting a bending unit, instead of the glass sheet, so as to adjust the conveying direction in the bending unit in accordance with the tilted posture of the glass sheet during conveyance.

In these glass sheet bending methods, if a heated glass sheet is brought into contact with e.g. a positioner, the heated glass sheet is susceptible to be distorted. In order to prevent the occurrence of such distortion for the purpose of maintaining a high productivity, it has been demanded to position a glass sheet without using a positioner while the glass sheet is conveyed.

### DISCLOSURE OF THE INVENTION

### PROBLEMS TO BE SOLVED BY THE INVENTION

By the way, in the technique described in JP-B-5-4932 mentioned above, since the curved plane defined by a plurality of conveying rollers does not move in synchronism with conveyance of a glass sheet, it is possible to maintain the accuracy of forming a glass sheet by adjusting the posture of the glass sheet or the conveying direction in the forming unit. On the other hand, in the technique described in JP-A-2000-72461 mentioned above, a curved plane defined by a plurality of conveying rollers is moved in the conveying direction by moving up and down each of the conveying rollers in synchronism with conveyance of a glass sheet. However, in this technique, even if the posture of the glass sheet is compensated by the method described in JP-A-2004-26537, it is not possible to place the glass sheet at an appropriate position on the curved plane defined by the conveying rollers unless the up-down movement of each conveying roller is carried out at an appropriate timing with an appropriate moving amount along with conveyance of the glass sheet. Accordingly the bending accuracy of the glass sheet is deteriorated. In particular, in recent years, design of a glass sheet tends to be more complicated, and forming of a shape having a plurality of curvatures in one direction is demanded, and forming of such a glass sheet is difficult by the technique described in JP-B-5-4932. Although forming of such a glass sheet is possible by the method described in JP-A-2000-72461, since a glass sheet is formed by forming a curved plane having a plurality of curvature radiuses along the conveying direction by controlling the timing of up-down movement of each conveying roller, the forming accuracy may be significantly deteriorated depending on the placed position of the glass sheet on the curved plane.

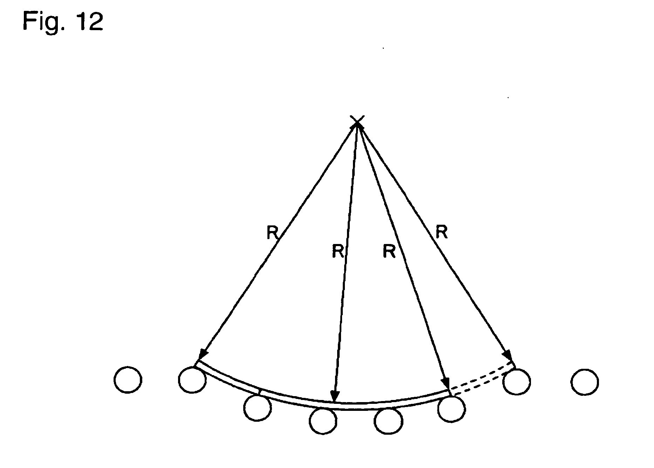

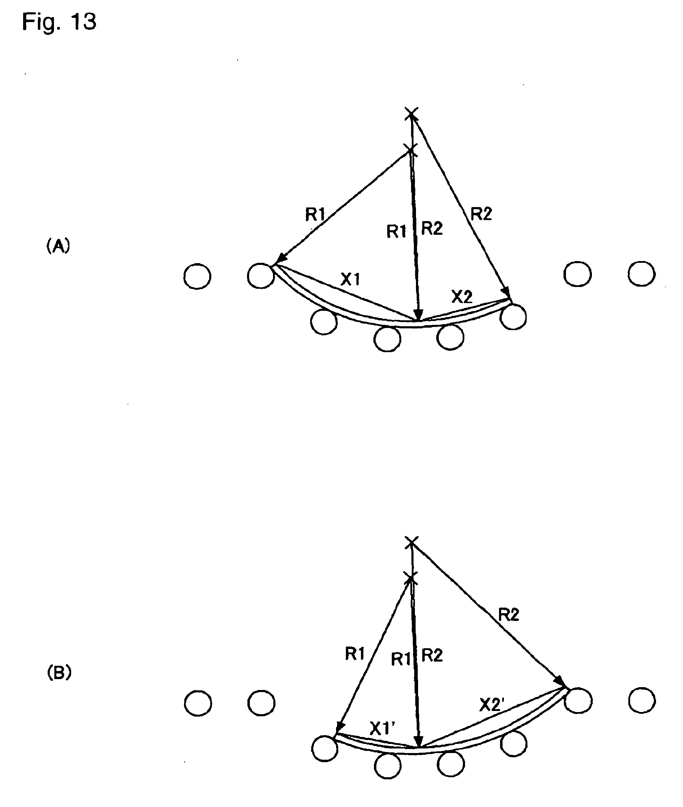

Namely, when the shape of a curved plane along the conveying direction is a conventional shape having a single curvature radius, if a curved plane larger than the glass size is formed as shown in Fig. 12, it is possible to allow a certain amount of timing error of the up-down movement of each conveying roller within a range between the position of the glass sheet represented by the solid line in Fig. 12 and the position of the glass sheet represented by the broken line in the figure. On the other hand, when the shape of the curved plane along the conveying direction is formed with a plurality of curvature radiuses, as shown in Fig. 13, the placed position of the glass sheet on the curved plane significantly influences on the forming accuracy of the glass sheet. Namely, for example, as shown in Fig. 13(A), when the length of a chord of a portion having a curvature radius of R1 is X1 and when the length of a chord of a portion having a curvature radius of R2 is X2, if the placed position of a glass sheet on a curved plane deviates from a desired position, the length of the chord of the portion having a radius of R1 becomes X1' and the length of the chord of the portion having a curvature radius of R2 becomes X2', whereby the forming accuracy of the glass sheet is deteriorated. To cope with this problem, it is necessary to carry out the up-down movement of each conveying roller at an appropriate timing with an appropriate movement amount along with conveyance of the glass sheet. Otherwise, the accuracy of bending of the glass sheet will be deteriorated.

The present invention has been made considering the above points, and it is an object of the present invention to provide a bending apparatus and a bending method for a glass sheet, which carry out up-down movement of each conveying roller with an appropriate timing with an appropriate moving amount to realize bending of a glass sheet with high accuracy.

### MEANS TO SOLVE THE PROBLEMS

The above object is achieved by a bending apparatus for a glass sheet comprising a roller conveyer having a plurality of conveying rollers for conveying a glass sheet heated by a heating furnace in a conveying direction; and a roller-driving means for moving each of the conveying rollers up and down in a direction perpendicular to the conveying direction to form a predetermined curved plane on a conveying plane defined by the plurality of conveying rollers and moving the curved plane in the conveying direction along with movement of the glass sheet in the conveying direction so as to bend the glass sheet along the conveying direction; wherein the bending apparatus for a glass sheet further comprises a glass-position-detecting means for detecting a position information of the glass sheet on the roller conveyer; and a controlling means for controlling the up-down movement of each of the conveying rollers by the roller-driving means in accordance with the position information detected by the glass-position-detecting means so as to form a predetermined curved plane on the conveying plane in accordance with the position of the glass sheet.

Further, the above object is achieved by a bending method for a glass sheet comprising conveying a heated glass sheet by a roller conveyor having a plurality of conveying rollers; forming a predetermined curved plane on a conveying plane defined by the plurality of conveying rollers by moving up and down each of the conveying rollers in a direction perpendicular to the conveying direction during the conveyance; and moving the curved plane in the conveying direction along with movement of the glass sheet so that the glass sheet is positioned on the curved plane, thereby to bend the glass sheet along the conveying direction by its own weight; the method further comprising a glass-position-detecting step of detecting a position information of the glass sheet on the roller conveyor; and a controlling step of controlling up-down movement of each of the conveying rollers in accordance with the position information detected in the glass-position-detecting step so as to form a predetermined curved plane on the conveying plane in accordance with the position of the glass sheet..

In these embodiments of the invention, a position information of a glass sheet on a roller conveyer constituted by a plurality of conveying rollers is detected, and based on the position information, a timing of up-down movement and a movement amount of the up-down movement of each of the conveying rollers are controlled so as to form a predetermined curved plane in accordance with the position of the glass sheet on a conveying plane defined by the plurality of conveying rollers. Then, when the curved plane is moved along with movement of the glass sheet in the conveying direction, the glass sheet is bent along the conveying direction with good accuracy as it is conveyed. In such a construction, by accurately obtaining the position information of the glass sheet, it is possible to form a curved plane by moving up and down at an appropriate timing each of the conveying rollers to which the glass sheet being conveyed contacts, and to obtain an information necessary to move the curved plane in the conveying direction. As a result, it becomes possible to accurately control a placed position of the glass sheet on the curved plane. Accordingly, even when a curved plane having a plurality of curvature radiuses along the conveying direction is required as a requirement of a design of the glass sheet, it is possible to realize the bending of the glass sheet with high accuracy.

Here, the above bending apparatus for a glass sheet may have such a construction that the glass-position-detecting means comprises an entry-detecting means for detecting entry of the glass sheet into a predetermined detection position located on the upstream side of a forming position on the roller conveyer where the up-down movement of each of the conveying rollers is carried out by the roller-driving means; and a position-information-calculating means for calculating a position information of the glass sheet; wherein the controlling means controls the up-down movement of each of the conveying rollers by the roller-driving means in accordance with the position information calculated by the position-information-calculating means so as to form a predetermined curved plane in accordance with a timing at which the glass sheet arrives at each of the conveying rollers.

Further, the above bending method for a glass sheet may have such a feature that the glass-position-detecting step comprises an entry-detecting step of detecting entry of the glass sheet into a predetermined detection position located on the upstream side of a forming position on the roller conveyor where the up-down movement of each of the conveying rollers is carried out, and a position-information-calculating step of calculating a position information of the glass sheet; and wherein the controlling step comprises controlling the up-down movement of each of the conveying rollers in accordance with the position information calculated in the position-information-calculating step so as to form a predetermined curved plane on the conveying plane in accordance with a timing at which the glass sheet arrives at each of the conveying rollers.

In these embodiments of the invention, a timing and a movement amount of up-down movement of each of the conveying rollers are controlled so as to form a predetermined curved plane in accordance with a timing at which a glass sheet is really conveyed to each of the conveying rollers constituting the conveying plane, based on the position information of the glass sheet. According to such a construction, it is possible to accurately obtain a timing at which the glass sheet is conveyed to each of the conveying rollers based on the position information of the glass sheet from the predetermined detecting position. Accordingly, since each of the conveying rollers moves independently, it is possible to accurately control the placed position of the glass sheet on the curved plane, and to simplify acquisition of the position information of the glass sheet and the control system for each of the conveying rollers. Accordingly, by the present invention, it is possible to realize bending of a glass sheet with high accuracy.

Further, the above bending apparatus for a glass sheet may have such a construction that the controlling means comprises an operation-timing-controlling means for starting the up-down movement of each of the conveying rollers by the roller-driving means when the position information calculated by the position-information-calculating means agrees with the start timing memorized in the memory means; and an operation-pattem-controlling means for carrying out the up-down movement of each of the conveying rollers by the roller-driving means according to the operation pattern memorized in the memory means.

Further, the above bending method for a glass sheet may have such a feature that the controlling step comprises an operation-timing-controlling step of starting the up-down movement of each of the conveying rollers when the position information calculated by the position-information-calculating step agrees with the start timing memorized in the memory means, and an operation pattern controlling step of carrying out the up-down movement of each of the conveying rollers according to the operation pattern memorized in the memory means.

In these embodiments of the invention, up-down movement of each of the conveying rollers starts when a position information of a glass sheet agrees with a start timing of up-down movement based on a distance information from a predetermined detection position, and the up-down movement of each of the conveying rollers is carried out according to an operation pattern of up-down movement that has been memorized in advance. In such a construction, by memorizing in advance a start timing of up-down movement of each of the conveying rollers based on the predetermined detection position, it becomes unnecessary to calculate a start timing at each time when a glass sheet is detected at the predetermined detection position, and accordingly, it becomes possible to simplify the control system while the high forming accuracy is maintained. Further, by preparing and memorizing an operation pattern for each of the conveying rollers and for each of designs of glass sheet, it is possible to obtain high repeatability and to reduce the time for process-recipe-change required at a time of changing the design of glass sheet.

Further, the bending apparatus for a glass sheet may further comprise a counter for counting a counter value regularly in accordance with the conveyance of the glass sheet; a start-address-calculating means for calculating a start address for starting the up-down movement of each of the conveying rollers by the roller-driving means in accordance with the start timing memorized in the memory means and the counter value counted by the counter; and a buffer memory means for buffer-memorizing the start address of each of the conveying rollers calculated by the start-address-calculating means at each time when an entry of a glass sheet into the predetermined detection position is detected by the entry-detecting means so that the start addresses are buffer-memorized in the order of glass sheets entered into the predetermined detection position so that the start addresses correspond to the respective glass sheets; wherein the operation-timing-controlling means reads out the start addresses of the respective conveying rollers in the order that they have been buffer-memorized in the buffer memory means, and instructs the roller-driving means to start the up-down movement at each time when the counter value by the counter agrees with the start address.

Further, the above bending method for a glass sheet may further comprise a counting step of counting a counter value regularly in accordance with conveyance of the glass sheet; a start-address-calculating step of calculating a start address for starting the up-down movement of each of the conveying rollers based on the start timing memorized in the memory means and the counter value counted in the counting step; and a buffer-memorizing step of buffer-memorizing the start address of each of the conveying rollers calculated in the start-address-calculating step at each time when an entry of a glass sheet into the predetermined detection position is detected in the entry-detecting step so that the start addresses are buffer-memorized in the order of glass sheets entered into the predetermined detection position so that the start addresses correspond to the respective glass sheets; wherein the operation timing-controlling step comprises reading out the start addresses of the respective conveying rollers in the order that they have been buffer-memorized in the buffer memory means, and starting the up-down movement of each of the conveying rollers at each time when the counter value counted in the counting step agrees with the start address.

According to these embodiments of the invention, when a continuous forming wherein a plurality of glass sheets are conveyed one after another is carried out, at each time when a glass sheet is detected at a predetermined detection position, a start address at which up-down movement of each of the conveying rollers starts is calculated, and the start address is buffer-memorized for each of the glass sheets. Then, a start address corresponding to the first glass sheet entered into the predetermined detection position for each of the conveying rollers is read out, up-down movement of each of the conveying rollers is started at an appropriate timing, and the up-down movement is carried out according to an operation pattern. When the up-down movement is completed, a start address corresponding to the next glass sheet entered into the predetermined detection position is read out, control of up-down movement of each of the conveying rollers is repeated in the same manner one after another. According to such a construction, even when forming of a plurality of glass sheets are carried out continuously in such a manner that before a glass sheet entered into a predetermined detection position reaches a final stage of the forming step, that is before forming of the glass sheet is completed, a new glass sheet enters into the predetermined detection position and forming of the glass sheet is started, it is possible to carry out up-down movement of each of the conveying rollers so as to correspond to each of the glass sheets without erasing operation information of previous glass sheet by memorizing the start address based on a counter value regularly counted along with conveyance of the glass sheet, whereby it is possible to bend a plurality of glass sheets continuously with high accuracy even with a simple control system. Without this function, forming of the next glass sheet cannot be carried out until forming of previous glass sheet is completed, and the production becomes inefficient.

Here, in these inventions, "bend(bent) along conveying directions" means to make the shape of a glass sheet to a shape curved around a horizontal axis perpendicular to the conveying direction. Namely, a glass sheet bent in the conveying direction has a curved cross section along the conveying accuracy.

### EFFECTS OF THE INVENTION

By the present invention, it is possible to carry out up-down movement of each of conveying rollers with an appropriate timing and an appropriate moving amount, whereby bending of a glass sheet can be realized with high precision.

### BRIEF DESCRIPTION OF THE DRAWINGS

Fig. 1: A perspective view of a bending apparatus for a glass sheet as an embodiment of the present invention.
Fig. 2: A block construction diagram of a main part of the bending apparatus of this Example.
Fig. 3: A cross-sectional view showing the structure of the main part of the bending apparatus of this Example.
Fig. 4: A transition view of a bending operation for a glass sheet by a roller conveyer in the bending apparatus of this Example.
Fig. 5: A transition view of a bending operation for a glass sheet by a roller conveyer in the bending apparatus of this Example.
Fig. 6: A transition view of a bending operation for a glass sheet by a roller conveyer in the bending apparatus of this Example.
Fig. 7: An explanation view showing the rotation speed of a conveying roller constituting the roller conveyer of this Example.
Fig. 8: A transition view of a bending operation for a glass sheet by a roller conveyer in the bending apparatus of this Example.
Fig. 9: An operation time chart in the bending apparatus of this Example.
Fig. 10: A flowchart of an example of control routine to be carried out to memorize data necessary for bending a glass sheet, that is being conveyed, to have a predetermined curvature in the bending apparatus of this Example.
Fig. 11: A flowchart of an example of a control routine to be carried out to bend a glass sheet, that is being conveyed, in the bending apparatus of this Example.
Fig. 12: A view showing a forming accuracy of a glass sheet according to a placed position of the glass sheet on a curved plane defined by a plurality of conveying rollers when the curved plane has a shape formed by a single curvature radius.
Fig. 13: A view showing a forming accuracy of a glass sheet according to a placed position of the glass sheet on a curved plane defined by a plurality of conveying rollers when the curved plane has a shape formed by a plurality of curvature radiuses.

### EXPLANATION OF NUMERALS

- 10:: bending apparatus for a glass sheet
- 14:: forming apparatus
- 18:: glass sheet
- 20:: roller conveyor
- 30:: conveying roller
- 32:: fixed frame
- 34:: movable frame
- 36:: servomotor
- 40:: controller
- 42:: photoelectric sensor
- 44:: pulse generator
- 46:: main memory device
- 48:: sub memory device

### BEST MODE FOR CARRYING OUT THE INVENTION

Now, specific embodiments of the present invention will be described with reference to drawings.

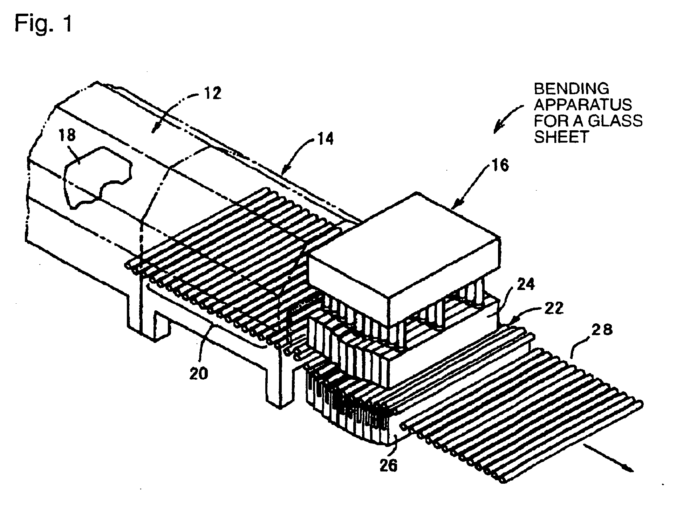

Fig. 1 is a perspective view of a bending apparatus 10 for a glass sheet as an embodiment of the present invention. The bending apparatus 10 of this Example is an apparatus for bending a glass sheet to be used for transportation equipments such as automobiles or trains, or for buildings, etc.

As shown in Fig. 1, the bending apparatus 10 of this example has a heating furnace 12, a forming apparatus 14 and an air-cooling tempering apparatus 16. The air-cooling tempering apparatus 16 is disposed at the downstream side of the heating furnace 12 and the forming apparatus 14 along a conveying path of a glass sheet 18.

The heating furnace 12 has a heater, and the heater heats the glass sheet 18 conveyed by a conveyor. The forming apparatus 14 has a roller conveyor 20, and bends the glass sheet 18 conveyed by the roller conveyor 20 along the conveying direction by a bending operation of the roller conveyor 20 to be described later. Here, the length of the roller conveyor 20 of the forming apparatus 14 is selected so that bending of a plurality of (for example, three) glass sheets arranged along the conveying direction can be carried out at the same time.

Further, the air-cooling tempering apparatus 16 has a roller conveyor 22 and blower heads 24, 26 disposed up and down positions across the roller conveyor 22, and is configured to carry out air-cooling-tempering of the glass sheet 18 being conveyed by the roller conveyor 22 by air blown from the blower heads 24, 26.

Next, a step of bending a glass sheet 18 in the bending apparatus 10 of this Example will be described.

In this Example, a flat plate-shaped glass sheet 18 cut into a predetermined shape is placed on an upstream portion of a conveyor at an entrance of a heating furnace 12, and is conveyed into the heating furnace 12 by the conveyor. Then, the glass sheet 18 is heated by a heater while it is conveyed in the heating furnace 12, so that the temperature of the glass sheet 18 at the exit of the heating furnace 12 becomes a temperature (about from 600 to 700°C) at which bending by the forming apparatus 14 is possible.

The glass sheet 18 heated in the heating furnace 12 is conveyed into the forming apparatus 14 by a roller conveyor 20. Then, the glass sheet 18 is bent into a desired curvature along the conveying direction by a bending operation by the roller conveyor 20 to be described later while the glass sheet 18 is conveyed in the forming apparatus 14.

The glass sheet 18 bent in the forming apparatus 14 is conveyed into an air-cooling tempering apparatus 16 disposed on the downstream side of the forming apparatus 14 by a roller conveyor 22. Then, the glass sheet 18 is air-cooling-tempered by air blown from blower heads 24, 26 while the glass sheet 18 is conveyed in the air-cooling tempering apparatus 16. The glass sheet 18 air-cooling-tempered in the air-cooling tempering apparatus 16 is conveyed from the exit of the apparatus to an inspection apparatus for the subsequent step by a roller conveyor 28.

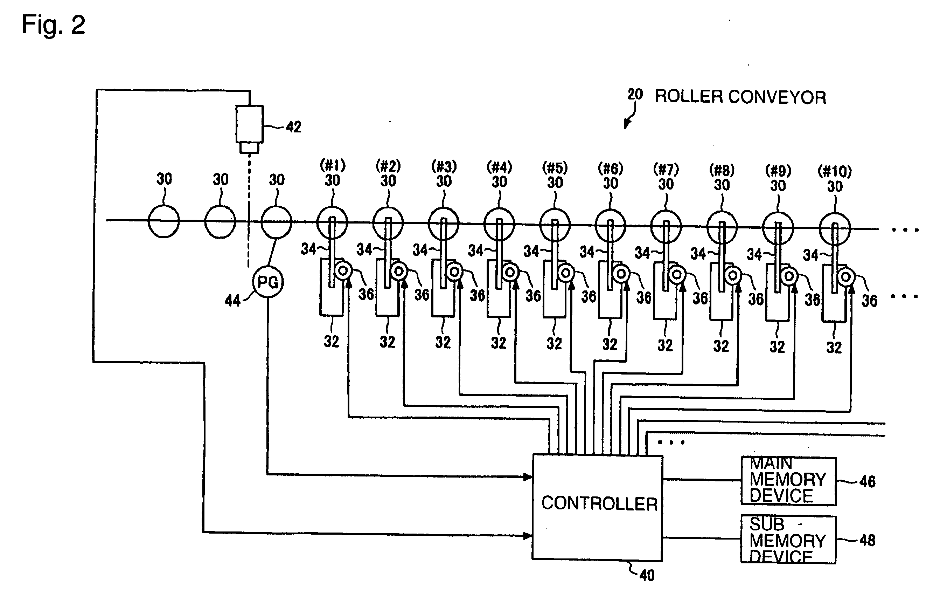

Fig. 2 is a block construction diagram of the forming apparatus 14 in the bending apparatus 10 of this Example

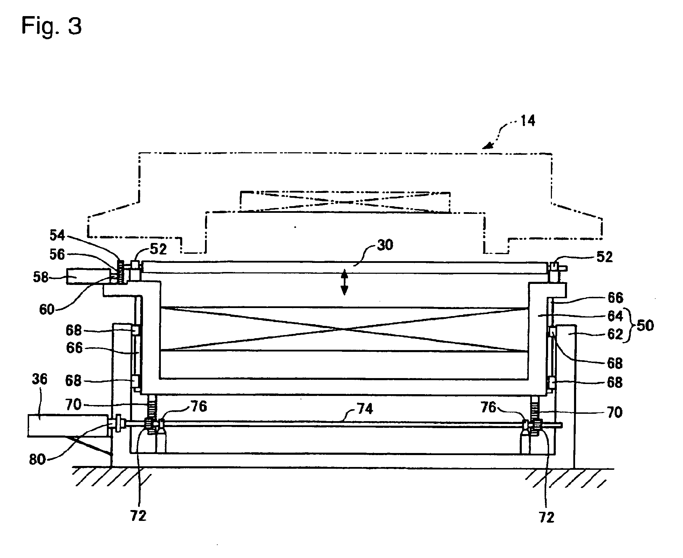

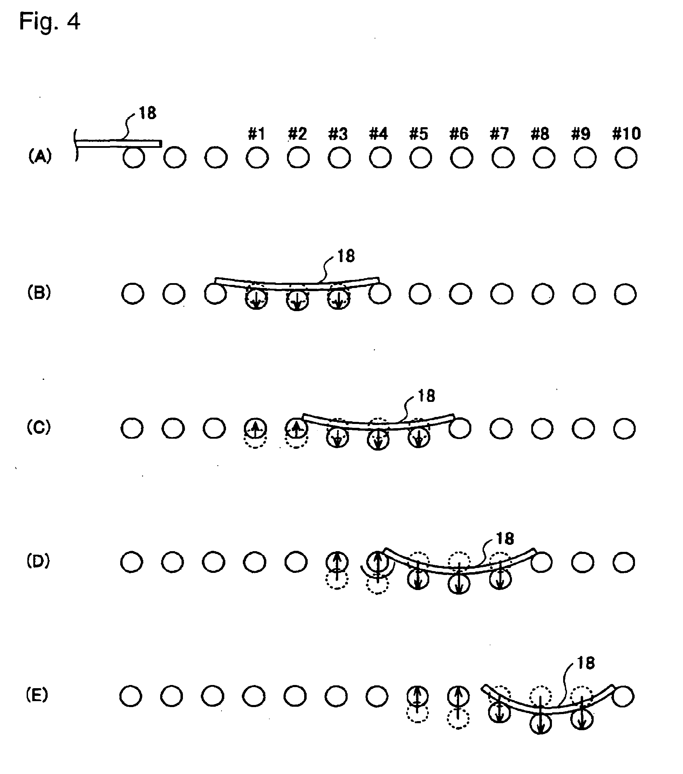

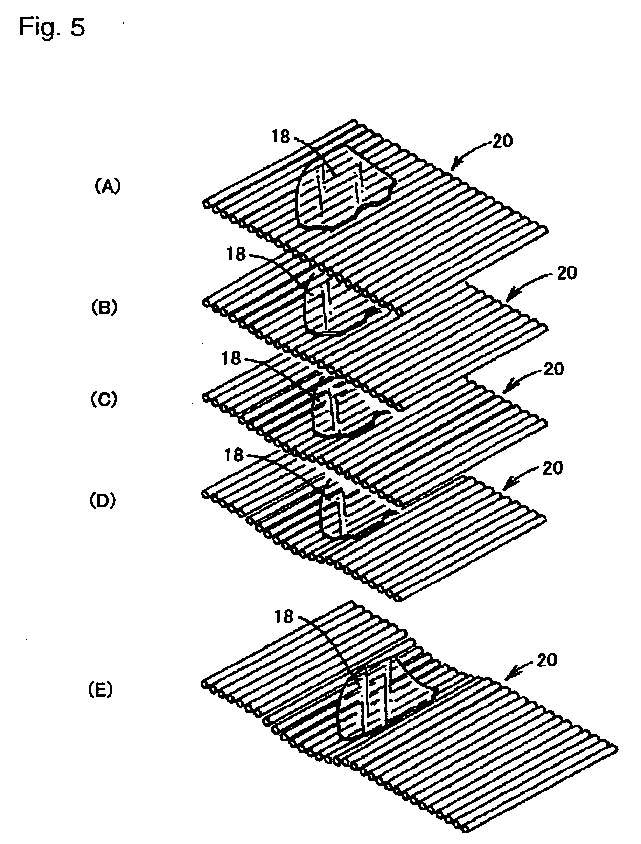

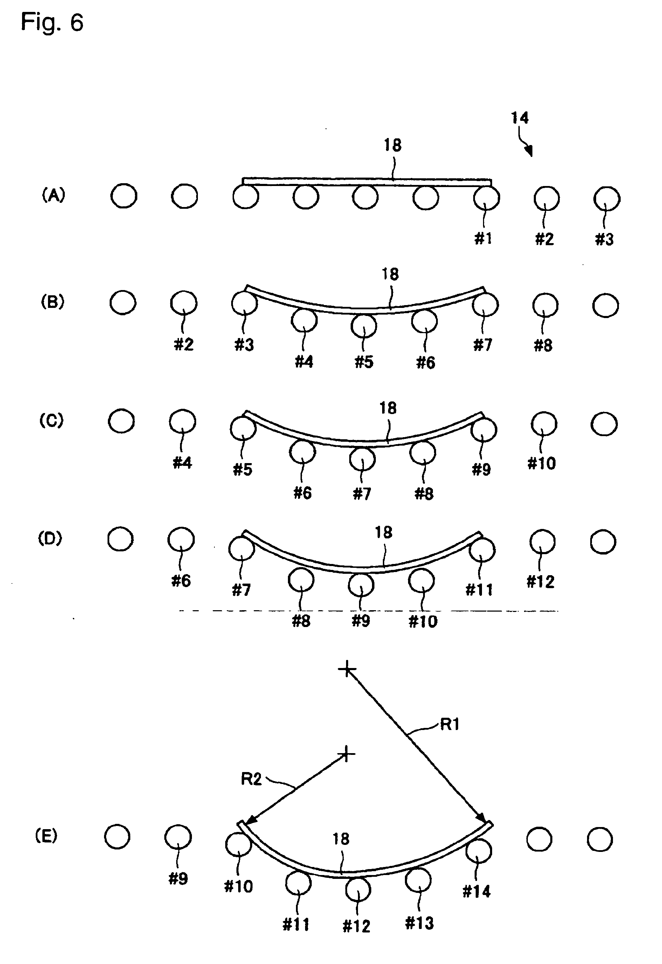

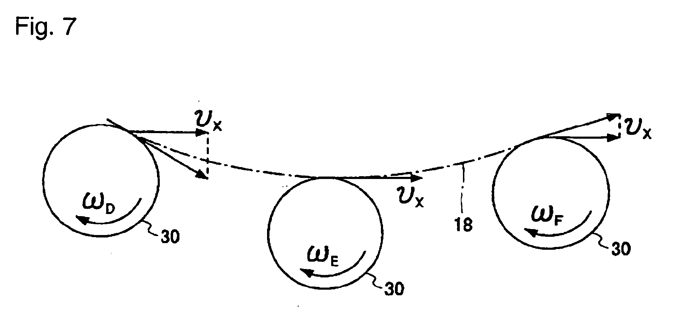

Fig. 3 is a cross-sectional view showing the construction of the forming apparatus 14 in the bending apparatus 10 of this Example. Figs. 4 to 6 show transition views of bending operation of a glass sheet by the roller conveyor 20 in the bending apparatus 14 of this Example. Here, Fig. 4 is a view showing the roller conveyor 20 observed from a transverse direction at the time of the forming operation when the curved plane is formed by a single curvature radius, Fig. 5 is a view showing the roller conveyor 20 observed from an obliquely upward direction in the case of Fig. 4, and Fig. 6 is a view showing the roller conveyor 20 from a transverse direction at the time of the forming operation when the curved plane is formed by two curvature radiuses. Further, Fig. 7 is a view showing rotational speeds of conveying rollers 30 constituting the roller conveyor 20 of this Example.

In this Example, the roller conveyor 20 of the forming apparatus 14 is constituted by a plurality of conveying rollers 30 having a cylindrical or a column shape whose axis extends in a horizontal direction perpendicular to the conveying direction of the glass sheet. Each of the conveying rollers 30 has both ends in the axis direction rotatably supported by a frame 50 of the roller conveyor 20 via bearings 52, and is configured to have a constant radius from the axis. The plurality of conveying rollers 30 are arranged in the conveying direction at predetermined intervals, so as to form a conveying plane for conveying a glass sheet in the conveying direction.

Here, the intervals of adjacent conveying rollers 30 are selected so that, for example, each glass sheet is supported by four conveying rollers 30.

To each of the conveying rollers 30, a spindle 60 of a servo motor 58 for rotating the conveying roller 30 is connected via gears 54 and 56. Each of the conveying rollers 30 is rotated about a rotational axis independently by being driven by a corresponding servo motor 58.

Further, the conveying rollers 30 include ones that perform only rotational drive around respective axes and ones that perform movement in up-down direction perpendicular to the conveying direction of a glass sheet as well as rotational drive around respective axes. Rotational drive of each of the conveying rollers 30 is carried out independently and up-down movement of each of the conveying rollers 30 is also carried out independently. Here, in Fig. 2, conveying rollers 30 capable of up-down movement are represented by #1 to #10. Here, the number of conveying rollers 30 capable of carrying out up-down movement is designated as n (a number of at least 2).

Namely, conveying rollers 30 that are capable of carrying out up-down movement are each supported by a frame 50 of the roller conveyor 20 so as to be movable in the up-down direction. For each of the conveying rollers 30 that do not perform up-down movement, the frame 50 is constituted only by a fixed frame 62 fixed to the ground. On the other hand, for each of the conveying rollers that perform up-down movement, the frame 50 is constituted by a fixed frame 62 fixed to the ground, and a movable frame 64 having both ends supported by the fixed frame 62 via a LM (linear motion) guide so as to be movable up and down. This LM guide is constituted by a guide rail 66 attached to the movable frame 64 side so as to extend in up-down direction, and a guide block 68 engaged with the guide rail 66 and attached to the fixed frame 62 side. Accordingly, up-down movement of each of the conveying rollers 30 capable of up-down movement, is realized by up-down movement of the movable frame 64 movable in up-down direction with respect to the fixed frame 62.

The movable frame 64 is provided for each conveying roller 30. From the bottom portion of each movable frame 64, racks 70 are provided so as to protrude downwardly therefrom. With the racks 70, respective pinions 72 are engaged. The pinions 72 are fixed to a rotational shaft 74 extending in the horizontal direction. The rotational shaft 74 has both ends supported by bearings 76, and one end (left side in Fig. 3) is connected to a spindle 80 of a servomotor 36. The servomotor 36 is provided for each movable frame 64, that is, for each conveying roller 30. Each servomotor 36 drives a corresponding conveying roller 30 in up-down direction perpendicular to the conveying direction.

When the rotational shaft 74 is rotated by the servomotor 36, the rotational motion is transformed into a linear motion by function of the pinions 72 and the racks 70, whereby the movable frame 64 and the conveying roller 30 supported by the movable frame 64 are moved up and down with respect to the fixed frame 62. Namely, each movable frame 64 moves up and down independently by drive of the corresponding servomotor 36, whereby the corresponding conveying roller is moved up and down.

In this Example, the forming apparatus 14 has a controller 40 for controlling rotational drive and up-down movement of each of the conveying rollers 30 as shown in Fig. 2. To the controller 40, a photoelectric sensor 42 is electrically connected. The photoelectric sensor 42 is disposed in the vicinity of the entrance of the forming apparatus 14, specifically, at a predetermined detection position on the upstream side of the position of conveying rollers 30 movable up and down. The photoelectric sensor 42 is a sensor for detecting entry of a glass sheet into the forming apparatus 14, which outputs a signal corresponding to presence or absence of a glass sheet at the predetermined detection position, to the controller 40. The controller 40 detects a rising edge corresponding to a change from absence to presence of glass sheet or a falling edge corresponding to a change from presence to absence of the glass sheet based on an output signal of the photoelectric sensor 42, whereby the controller 40 detects entry of the glass sheet into the predetermined detection position.

To a rotation shaft of one of the conveying rollers 30 that do not move up and down, a pulse generator 44 is attached. The pulse generator 44 is electrically connected to the controller 40. The pulse generator 44 is a device which generates a pulse signal each time when the conveying roller 30 rotates by a predetermined angle, and outputs the pulse signal to the controller 40. The controller 40 detects the rotation of the predetermined angle of the roller 30 based on the output pulse signal from the pulse generator, and regularly counts the number of pulse signals (pulse counter value) from a reference time (such as a start time of operation) along with conveyance of a glass sheet. Then, the controller 40 calculates rotation amount of the conveying roller 30, that is, the conveying distance (position information) of the glass sheet.

The controller 40 is electrically connected to a main memory device 46 that is readable and writable, and a sub memory device 48 that is readable and writable. In the main memory device 46, for each model of glass sheet and for each of the conveying rollers 30 movable up and down, data necessary for bending a glass sheet to have a desired curvature along the conveying direction is stored. Further, in the sub memory device 48, for each glass sheet entered to the predetermined detection position where the optoelectric sensor 42 is disposed, data necessary for bending the glass sheet to have a desired curvature along the conveying direction after the entry is buffer-stored.

Here, the data to be stored in the main memory device 46 is a timing to start up-down movement of each of the conveying rollers 30 after a glass sheet is entered into a predetermined detection position where the optoelectric sensor 42 is disposed (namely, a pulse counter value counted by using a pulse generator 44 during conveyance of the glass sheet on the roller conveyor 20 from an entry of a glass sheet into the predetermined detection position to start of up-down movement of the conveying roller 30), and an operation pattern of the up-down movement (specifically, change of movement amount of the up-down movement along with conveyance of the glass sheet) after start of the up-down movement. Here, the operation pattern of up-down movement of each of the conveying rollers 30, is set so as to form a predetermined curved plane in accordance with a conveying position of the glass sheet.

The controller 40 is also connected to servomotors 58 corresponding to respective conveying rollers 30, and servomotors 36 corresponding to respective conveying rollers 30 movable up and down. At each time when the controller 40 detects entry of a glass sheet into the predetermined detection position by using the optoelectric sensor 42, the controller 40 reads out an information of the glass sheet from the main memory device 46 and writes an information corresponding to the present status into the sub memory device 48, and outputs instruction signals to servomotors 58, 36 so that each of the conveying rollers 30 rotates or moves up and down according to the information written into the sub memory device 48.

When a model information of glass sheet is input to the controller 40 from the outside, the controller 40 prepares an angular speed control data and up-down movement control data of each of the conveying rollers 30 that correspond to a desired curvature of the glass sheet of the model. Then, the controller 40 controls the servomotors 58 according to the prepared angular speed control data, and controls the servomotors 36 according to the up-down control data. Namely, the controller 40 performs a multi-axis control of the conveying rollers 30 so as to bend a glass sheet to have a predetermined curvature while the glass sheet is conveyed by the conveying rollers 30.

Next, bending operation of a glass sheet by the conveying roller 20 in the forming apparatus 14 of this Example will be described. In this Example, up-down movement of each of the conveying rollers 30 movable up and down, is performed so that, along with conveyance of a glass sheet, down movement and up movement are sequentially carried out from conveying rollers 30 on the upstream side towards the conveying rollers 30 on the downstream side.

When no glass sheet heated by the heating furnace is conveyed in the forming apparatus 14, that is, strictly speaking, until the glass sheet reaches a conveying roller 30 (#1) located at the most upstream position and movable up and down, conveying rollers movable up and down are all at the top position, whereby a conveying plane defined by the plurality of conveying rollers 30 is flat (Fig. 4(A) and Fig. 5(A)).

Then, when a glass sheet is conveyed into the forming apparatus 14, first, conveying rollers 30 of #1 to #3 move down. At this time, in a conveying plane defined by all conveying rollers 30, a conveying plane defined by conveying rollers 30 of #1 to #3 deforms into a gentle downward convex curve having a large curvature radius (Fig. 4(B) and Fig. 5(B)). When such a deformation of the curved plane is carried out, the glass sheet deflects downwardly along the curved plane defined by the conveying rollers 30 of #1 to #3 by its own weight while the glass sheet passes on the conveying plane, and is deformed into a shape along the curved plane.

Here, if the angular speed (rotational speed) of each of the conveying rollers 30 is constant irrespective of up-down movement, horizontal components of speeds of the conveying rollers 30 differ from one another depending on the up-down positions of the conveying rollers 30, whereby a glass sheet is not properly conveyed and a problem such as scratches on the glass sheet may occur.

To cope with this problem, the controller 40 sets an angular speed of each of the conveying rollers 30 considering its up-down position so that horizontal components Vx of conveying speeds of all conveying rollers 30 become equal, and in order to achieve the set angular speed considering the up-down position of each of the conveying rollers, the controller 40 sends an instruction signal to change angular speed of each of the servomotors for rotating the corresponding conveying rollers 30 in accordance with the timing of the up-down movement of each of the conveying rollers. Namely, for example, when the conveying rollers 30 of #1 to #3 are moved up and down, the controller 40 controls the angular speeds of the conveying rollers 30 of #1 to #3 so as to satisfy a relation ω1>ω2<ω3 (ω1, w2 and w3 are angular speeds of conveying rollers 30 of #1 to #3, respectively) by using the up-down positions of these rollers as parameters. Namely, in Fig. 7, the angular speeds ω_{D}, ω_{E} and ω_{F} of the conveying rollers 30 are controlled so that the horizontal components ∨_{X} of the conveying speeds of these conveying rollers are the same. By such an operation, since the conveying rollers 30 are rotated with the same speed in the horizontal component, it is possible to convey a glass sheet properly, and the above-mentioned problems are solved.

When the glass sheet is further conveyed, the conveying rollers 30 of #3 to #5 move downwardly more deeply than the down movement of the conveying rollers #1 to #3, and a conveying plane defined by the conveying rollers 30 of #3 to #5 deforms into a curved shape having a smaller curvature radius (sharper curvature) than the conveying plane at the time of down movement of the conveying rollers 30 of #1 to #3 (Fig. 4(C) and Fig. 5(C)). When such a deformation of conveying plane is performed, the glass sheet is further deflected downwardly along the conveying plane defined by the conveying rollers 30 of #3 to #5 by its own weight while the glass sheet passes on the conveying plane, and is deformed into a shape along the curved plane.

Here, since the glass sheet is continuously moved from the upstream side towards the downstream side on the roller conveyor 20, the conveying rollers 30 of #1 and #2 move up from the state of Fig. 4(B) and Fig. 5(B) to the state of Fig. 4(C) and Fig. 5(C), and return to the initial state of Fig. 4(A) and Fig. 5(A).

Then, when the glass sheet is positioned at substantially at the middle point of the conveying path, conveying rollers 30 of #5 to #7 move down more deeply than the down movement of the conveying rollers 30 of #3 to #5, whereby the conveying plane defined by the conveying rollers 30 of #5 to #7 deforms into a curved shape having a smaller curvature radius than that of the conveying plane at the time of down movement of the conveying rollers 30 of #3 to #5 (Fig. 4(D) and Fig. 5(D)). When such a deformation of the conveying plane is performed, the glass sheet is further deflected downwardly along the curved plane defined by the conveying rollers 30 of #5 to #7 by its own weight while it passes on the conveying plane, and is deformed into a shape along the curved plane.

Then, finally, when the glass sheet is positioned at a downstream portion of the conveying path, conveying rollers 30 of #7 to #9 move more deeply than the down movement of the conveying rollers 30 of #5 to #7, whereby the conveying plane defined by the conveying rollers 30 of #7 to #9 deforms into a curved shape having a curvature corresponding to a desired curvature of a glass sheet to be finally obtained (Fig. 4(E) and Fig. 5(E)). When such a deformation of the conveying plane is performed, the glass sheet is further deflected downwardly along the curved plane defined by the conveying rollers 30 of #7 to #9 by its own weight while it passes on the conveying plane, and is deformed into a shape along the conveying plane thereby to be bent into a desired curvature.

Accordingly, in the initial stage of the conveyance, a plurality of conveying rollers 30 move downwardly to curve the conveying plane into a downward convex shape, and thereafter, a plurality of conveying rollers 30 perform up-down movement thereby to move the curve of the conveying plane in the conveying direction. Then, along with conveyance of the glass sheet 18, the degree of downward movement of the conveying rollers 30 increases, whereby the curvature radius of the curved plane of the conveying plane decreases.

When a glass sheet is conveyed, each of the conveying rollers 30 of the forming apparatus 14 performs one cycle of up-down movement along with movement of the glass sheet. In this operation, a downward convex curved plane is formed by a plurality of conveying rollers 30 at a position of the glass sheet and the curved plane progresses in the conveying direction along with the conveyance of the glass sheet. During the conveyance, a front end portion and a rear end portion of the glass sheet in the conveying direction are maintained at a normal conveying level, and a central portion in the conveying direction is deflected downwardly from the normal conveying level in accordance with lowered positions of the conveying rollers 30.

Here, since the front end and the rear end of the glass sheet in the conveying direction are maintained at a normal conveying level, the conveying direction of the glass sheet becomes a direction parallel with the conveying level. Further, since it is necessary to more deeply bend the glass sheet as it progresses to the downstream side, the amplitude of the conveying plane, that is, the amplitude of up-down movements of the conveying rollers 30 increases towards the downstream side.

Further, into the forming apparatus 14 of this Example, a plurality of glass sheets are conveyed continuously one after another, and the plurality of glass sheets are bent by the forming apparatus 14 at respective conveyed positions. Accordingly, each of the conveying rollers 30 of the forming apparatus 14 repeats up-down movement in order to bend the glass sheets conveyed one after another. Then, in the forming apparatus 14, a plurality of downward convex curved plane are formed by the plurality of conveying rollers 30, and they progress in the conveying direction.

Thus, by the forming apparatus 14 of this Example, it is possible to bend a glass sheet by moving up and down a plurality of conveying rollers 30 in synchronism with the conveyance of the glass sheet, it is possible to bend the glass sheet. Accordingly, it is possible to omit an exchanging work of the conveying rollers at a time of carrying out bending of glass sheets. Further, by appropriately changing the start timing of up-down movement and the operation pattern of each of the conveying rollers 30, it is possible to bend glass sheets of different models. Accordingly, it is possible to substantially eliminate process-recipe-change time.

By the way, when a glass sheet is to be bent into a simple curved plane having a single curvature radius, the conveying plane defined by a plurality of conveying rollers 30 is formed into a curved plane having a single curvature radius. Further, when a glass sheet is to be bent into a curved plane having a plurality of curvature radius in the conveying direction, as to be described in detail later, a conveying plane defined by a plurality of conveying rollers 30 is formed into a curved plane having a plurality of curvature radiuses. Now, a case where a glass sheet is to be bent into a complexly curved plane having a curved plane of curvature radius R1 and a curved plane of a curvatures radius R2, will be described with reference to Fig. 6.

When no glass sheet heated in the heating furnace is conveyed in the forming apparatus 14, that is strictly speaking, until a glass sheet reaches a conveying roller 30 (#1) movable up and down that is located at the most upstream side, the conveying rollers 30 movable up and down are all at the highest position, and a conveying plane defined by a plurality of conveying rollers 30 is flat (Fig. 6(A)). Then, when the glass sheet is conveyed into the forming apparatus 14, the conveying rollers 30 sequentially move down so that a conveying plane defined by the conveying rollers 30 of #3 to #7 deforms into a relatively gentle curved shape (Fig. 6(B)). When such a deformation of the conveying plane is carried out, the glass sheet passing on the conveying plane deflects downwardly along the curved plane defined by the conveying rollers 30 of #3 to #7 by its own weight and is deformed into a shape along the curved plane.

When the glass sheet is further conveyed, the conveying rollers 30 of #5 to #9 more deeply move down than the down movements of the conveying rollers 30 of #3 to #7, and a conveying plane defined by the conveying rollers 30 of #5 to #9 deforms into a curved shape having a smaller curvature radius than that of the conveying plane at the time of down movement of the conveying rollers 30 of #3 to #7 (Fig. 6(C)). Here, the curved plane defined by the conveying rollers 30 of #5 to #9 is not formed by a single curvature radius but that is a complex plane constituted by two curved planes having different curvature radiuses. Specifically, the complex curved plane is constituted by a curved plane having a small curvature radius defined by the conveying rollers 30 of #5 and #6 and a curved plane having a large curvature radius defined by conveying rollers 30 of #7 to #9. When such a deformation of conveying plane is performed, the glass sheet passing on the conveying plane is deflected downwardly along the curved plane defined by the conveying rollers 30 of #5 to #9 by its own weight, and is deformed into a shape along the curved plane, that is a curved plane having two curvature radiuses.

When the glass sheet is further conveyed, the conveying rollers 30 of #7 to #11 move down more deeply than the down movement of the conveying rollers 30 of #5 to #9, and a curved plane defined by the conveying rollers of #7 to #11 deforms into a curved shape having a smaller curvature radius than that of the conveying plane at the time of down movements of the conveying rollers 30 of #5 to #9 (Fig. 6(D)). Here, the curved plane defined by the conveying rollers 30 of #7 to #11 is also a complex curved plane having two different curvature radiuses. Specifically, the convex curved plane is constituted by a curved plane having a small curvature radius defined by the conveying rollers 30 of #7 and #8 and a curved plane having a large curvature radius defined by the conveying rollers 30 of #9 to #11. When such a deformation of the conveying plane is performed, a glass sheet passing on the conveying plane is more deeply deflected downwardly along the curved plane defined by the conveying rollers 30 of #7 to #11 by its own weight, and is deformed into a shape along the curved plane, that is, a curved plane having two curvature radiuses.

Finally, when the glass sheet is positioned at the downstream side in the conveying path in the forming apparatus 14, the conveying rollers 30 of #9 to #13 move down more deeply than the down movements of the conveying rollers 30 of #7 to #11, and a conveying plane defined by the conveying rollers 30 of #9 to #13 deforms into a curved shape having a curvature corresponding to a desired curvature of a glass sheet to be finally obtained (Fig. 6(E)). Namely, the conveying plane defined by the conveying rollers 30 of #9 and #10 is curved into a curved plane having a curvature radius of R2, and a conveying plane defined by the conveying rollers 30 of #10 to #13 is curved into a curved plane having a curvature radius of R1. When such a deformation of the conveying plane is performed, a glass sheet passing on the conveying plane is further deflected downwardly along the curved plane defined by the conveying rollers 30 of #9 to #13 by its own weight, and bent into a shape to be finally obtained, that is a complex curved plane constituted by a curved plane of a curvature radius R1 and a curved plane of a curvature radius R2.

Thus, by the forming apparatus 14 of this Example, by appropriately changing operation pattern of up-down movement of each of the conveying rollers 30, it is not possible only to bend a glass sheet into a curved plane having a single curvature radius, but also to bend a glass sheet into a complex curved plane having a plurality of curvature radiuses.

Next, a process of the controller 40 in the forming apparatus 14 of this Example to carry out the above bending operation of glass sheet, will be described. Hereinafter, for convenience of explanation, it is assumed that at most three glass sheets are bent simultaneously at their respective conveying positions in the forming apparatus 14.

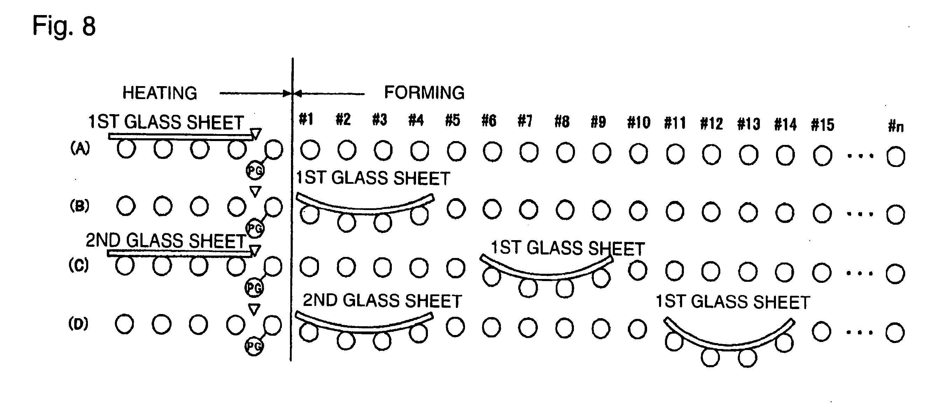

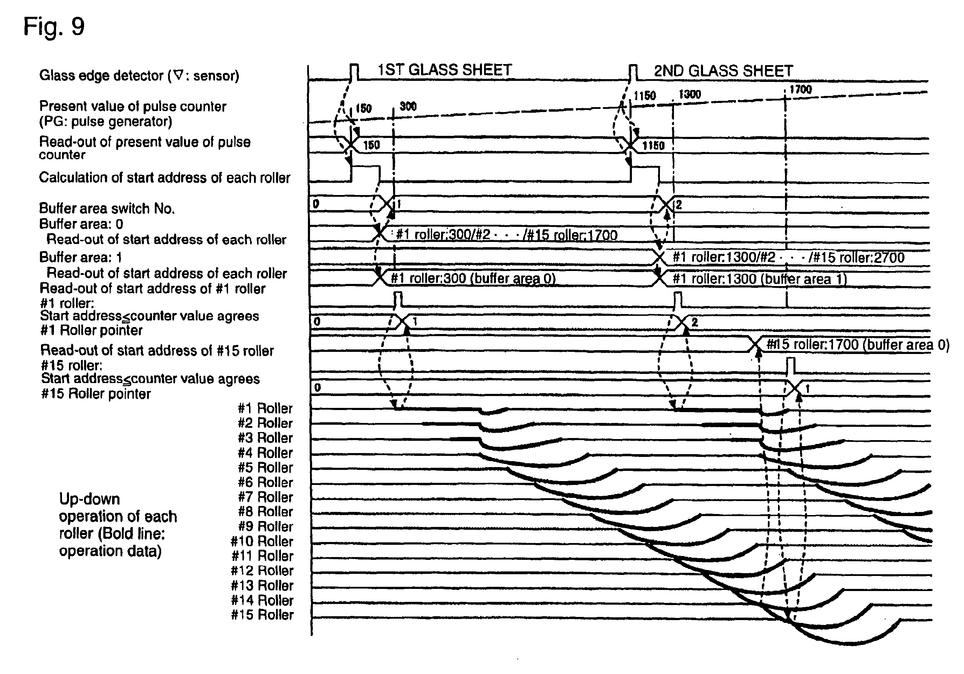

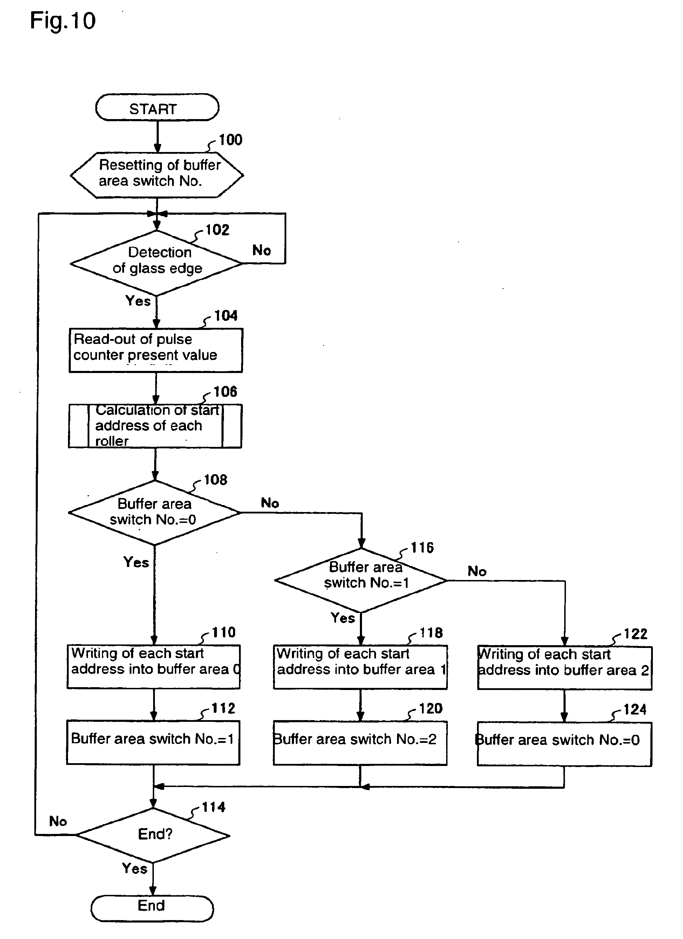

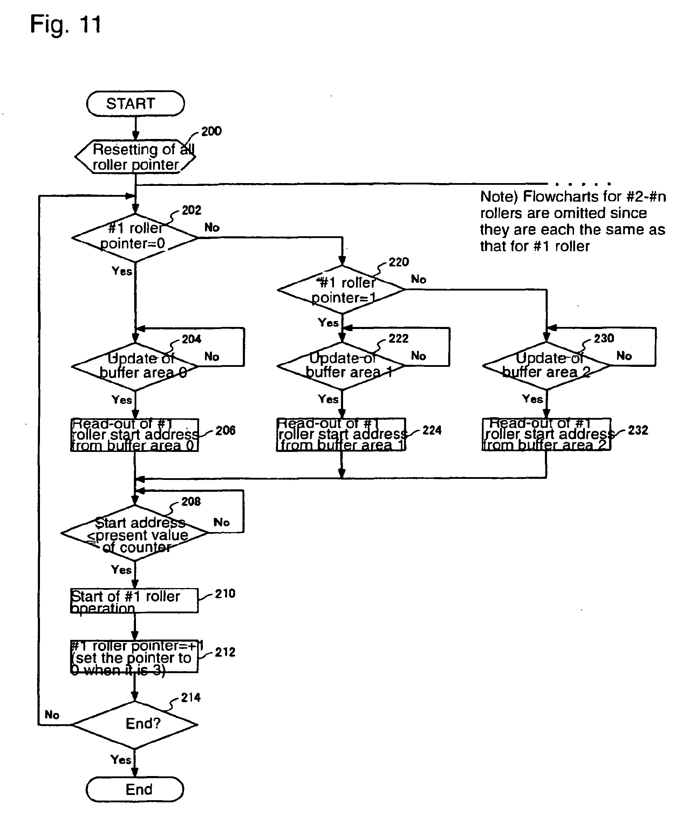

Fig. 8 is a transition view of bending operation of a glass sheet 18 by the roller conveyer 20 in the forming apparatus 14 of this Example. Fig. 9 is an operation time chart of the forming apparatus 14 of this Example. Fig. 10 is a flowchart of an example of a control routine to be executed by the controller 40 in the forming apparatus 14 of this Example to memorize into a sub memory device 48 data necessary for bending a conveyed glass sheet into a desired curvature. Further, Fig. 11 is a flowchart of an example of a control routine for the controller 14 in the forming apparatus 15 of this Example to execute to bend a conveyed glass sheet.

In this Example, in a main memory device 46, as described above, for each model of glass sheet and each of the conveying rollers 30 movable up and down, there is stored data necessary for bending a glass sheet into a desired curvature, specifically, a start timing of up-down movement of the conveying roller 30 after the glass sheet enters into a predetermined detection position where an optoelectric sensor 42 is disposed, and an operation pattern of up-down movement after the start. Further, in a sub memory device 48, as described above, there is buffer-memorized data necessary for bending a glass sheet into a desired curvature for each of glass sheets entered into the predetermined direction position where the optoelectric sensor 42 is disposed. The buffer area of the sub memory device 48 is divided into a plurality of areas, wherein the number of areas corresponds to the maximum number (3 in this Example) of glass sheets bent simultaneously in the forming apparatus 14. Hereinafter, these areas are designated as a buffer area 0, a buffer area 1 and a buffer area 2, respectively.

The controller 40 performs a process of resetting a buffer area No. to be processed (to be used for buffer-memorizing) (hereinafter referred to as buffer area switch NO.) to be "0" (Step 100). Here, this buffer area Switch NO. is to be memorized in the sub memory device 48, and when data is written into a buffer area, the No. is switched to the No. of the next buffer area. Then, thereafter, the controller 40 judges presence or absence of edge detection showing entry of a glass sheet into the predetermined detection position based on a signal from the optoelectric sensor 42 (Step 102), and repeats this judgment until a positive judgment is made.

As a result, when an edge of a glass sheet is detected and the controller judges that the glass sheet has entered into the predetermined detection position of the forming apparatus 14, the controller reads a present value ("150" or "1150" in Fig. 9) of a pulse counter based on output pulse signals from a pulse generator 44 at that time (Step 104). Then, the controller calculates a start timing of up-down movement of each of the conveying rollers 30 to handle the glass sheet entered into the predetermined detection position.

Specifically, based on the read present value of the pulse counter and the start timing of up-down movement of each of the conveying rollers 30 after the entry of the glass sheet into the predetermined detection position memorized in the main memory device 46, the controller 40 calculates a start address based on the conveying distance of the glass sheet, that presents a timing to start up-down movement of each of the conveying rollers 30 to handle the entered glass sheet (namely, the start address is the sum of a present value of the pulse counter and a pulse counter value of pulse signals to be generated by the pulse generator corresponding to a conveying distance to be conveyed from the entry of the glass sheet into the predetermined detection position to a position corresponding to the start timing of up-down movement; in Fig. 9, for example, "300" or "1300" for the conveying roller 30 of #1, "1700" or "2700" for the conveying roller 30 of #15) (Step 106).

The controller 40 judges whether the buffer area Switch NO. showing the buffer area to be processed at this time is "0" (Step 108). As a result, if a positive judgment is made, then, a start address of each of the conveying rollers 30 (for example "300" for the conveying roller 30 of #1, "1700" for the conveying roller 30 of #15) calculated in the above Step 106 is written into the buffer area 0 (Step 110), and the buffer area Switch NO. is switched to "1" (Step 112).

Further, the controller 40 repeats the process on and after the above Step 102 until the end of operation is judged (positive judgment of Step 114). Then, if the controller 40 judges that the buffer area switch NO. is not "0" in Step 108, then, the controller 40 judges whether the buffer area switch NO. is "1" (Step 116), and if a positive judgment is made, then, the latest start address of each of the conveying rollers 30 calculated in the above Step 106 (for example, "1300" for the conveying roller 30 of #1, "2700" for the conveying roller 30 of #15) is written into the buffer area 1 (Step 118), and the buffer area Switch NO. is switched to "2" (Step 120).

Further, the controller 40 repeats the process on and after the Step 102 until completion of operation is judged (positive judgment of Step 114). Then, when a negative judgment, that is judgment of buffer area switch NO. as not "0", is made in Step 108 and a negative judgment, that is judgment of buffer area switch NO. as not "1", is made in Step 116, the controller judges that the present buffer area switch NO. is "2" and subsequently, the latest start address of each of the conveying rollers 30 calculated in the above Step 106 is written into the buffer area 2 (Step 122), and the buffer area switch NO. is switched to be "0" (Step 124).

In the above process shown in Fig. 10, even when a next glass is conveyed into the forming apparatus 14 in a period of from entry of a previous glass sheet into the forming apparatus 14 to completion of its bending, that is, even when bending of a plurality of glass sheets can be performed at respective conveying positions in the forming apparatus 14, it is possible to memorize in the sub memory device 48 the timing to start up-down movement of each of the conveying rollers 30 necessary for bending each glass sheet into a desired curvature after its entry into the predetermined detection position, and such memorizing is carried out for each glass sheet to be conveyed.

Further, at a start of operation, the controller 40 carries out a process of resetting to be "0" all roll pointers for respective conveying rollers 30 movable up and down, each indicating a buffer area that includes data to be used to start up-down movement of the conveying roller 30 (Step 200). Here, the roll pointer for each of the conveying rollers 30 is stored in the sub memory device 48, and when a conveying roller 30 starts up-down movement, the roll pointer is changed to point the next buffer area. Then, thereafter, the controller 40 carries out a process of moving up and down each of the conveying rollers 30 movable up and down as described below. Here, since all conveying rollers movable up and down perform in the same manner, in the following, only the process of a conveying roller 30 of #1 will be described.

Namely, the controller 40 judges whether a roll pointer for the conveying roller 30 of #1 is "0" (Step 202). As a result, if the controller judges that the roll pointer is "0", then, thereafter, the controller judges whether the start address written in a buffer area 0 is updated (Step 204), and such a judgment is repeated until a positive judgment is made.

As a result, if the controller 40 judges that the data in the buffer area 0 is updated, the controller 40 judges that a new glass sheet is conveyed into the predetermined detection position (position where the optoelectric sensor 42 is disposed), and then, the controller 40 reads out a start address of the conveying roller 30 of #1 that has been memorized in the buffer area 0 at the time of entry of the glass sheet (Step 206). Then, thereafter, the controller 40 judges whether the present value of the pulse counter based on pulse signals output from a pulse generator 44 agrees with the read-out start address (Step 208), and the controller 40 repeats such a judgment until a positive judgment is made.

As a result, if the controller 40 judges that the present address of the pulse counter has reached the start address read out in the Step 206, the controller 40 judges that a glass sheet is conveyed to the position to start up-down movement of the conveying roller 30 of #1, and then, the controller 40 instructs to start up-down movement of the conveying roller of #1 (Step 210) and performs an inclement of a roll pointer for the conveying roller 30 of #1 by "1" (Step 212). After the start of the up-down movement, the controller 40 instructs the conveying roller 30 of #1 to carry out the up-down movement according to an operation pattern to be realized after the start of up-down movement memorized in the main memory device 46, and instructs the conveying roller to change the up-down position along with conveyance of the glass sheet, that is, in accordance with the conveying distance of the glass sheet.

The controller 40 repeats the execution of the above-mentioned up-down movement of the conveying roller 30 of #1 until completion of operation is judged (positive judgment in Step 230), and carries out a process on and after Step 202.

On the other hand, when the controller 40 judges that the roll pointer for the conveying roller 30 of #1 is not "0" in the Step 202, then, the controller 40 judges whether the roll pointer is "1" (Step 220). As a result, if the controller 40 judges that the roll pointer is "1", then, thereafter, judges whether the start address written in the buffer area 1 is updated (Step 222), and repeats the judgment until a positive judgment is made.

As a result, when the controller 40 judges that the data in the buffer area 1 is updated, the controller judges that a new glass sheet is conveyed to the predetermined detection position (position where the optoelectric sensor 42 is disposed), and then, the controller reads out the start address of the conveying roller 30 of #1 that has been written in the buffer area 1 at the time of the entry of the glass sheet (Step 224). Then, thereafter, the controller 40 judges whether the present value of the pulse counter based on the pulse signals output from the pulse generator 44 agrees with the read-out start address (Step 208), and repeats the judgment until a positive judgment is made. Thereafter, the above-mentioned Steps 210 to 214 are carried out.

Further, when the controller 40 judges that the roll pointer for the conveying roller 30 of #1 is not "1" in the Step 220, the controller judges that the roll pointer is "2", then, thereafter, the controller judges whether the start address written in the buffer area 2 is updated (Step 230), and repeats the judgment until a positive judgment is made.

As a result, if the controller judges that the data in the buffer area 2 is updated, the controller judges that a new glass sheet is conveyed into the predetermined detection position (position where the optoelectric sensor 42 is disposed), and then, reads out the start address of the conveying roller 30 of #1 that has been written in the buffer area 2 at the time of entry (Step 232). Then, thereafter, the controller judges whether the present value of the pulse counter based on the pulse signals output from the pulse generator 44 agrees with the read-out start address (Step 208), and repeats the judgment until a positive judgment is made. Thereafter, in the same manner, the process of the above-mentioned Steps 210 to 214 are carried out.

The controller 40 carries out the process of the Steps 202 to 214 for up-down movement of each of the conveying rollers 30 of #2 to #n.

By the process shown in Fig. 11, when a plurality of glass sheets are continuously conveyed into the forming apparatus 14, it is possible to maintain the memory of data for bending of all glass sheets being conveyed in the forming apparatus 14 memorized in the sub memory device 48 without erasing data for bending of a glass sheet that has been conveyed into the forming apparatus 14 previously. As a result, it is possible to move up and down each of the conveying rollers 30 to realize bending of each of the glass sheets one after another based on the respective data. Namely, even when a plurality of glass sheets are continuously conveyed into the forming apparatus and they are present in the forming apparatus 14 at the same time, it is possible to move up and down each of the conveying rollers 30 of #1 to #n movable up and down at respective independent timings with respective independent operation patterns in accordance with the conveying positions of the glass sheets.

The up-down movement of each of these plurality of conveying rollers 30 is started according to a start timing memorized in advance in the main memory device 46, and is carried out according to an operation pattern for forming a predetermined curved plane on the conveying plane in accordance with the conveying position (conveying distance) of a glass sheet. Further, in order to carry out up-down movement of each of the conveying rollers 30, entry of a glass sheet into the predetermined detection position is detected by using an optoelectric sensor 42, and the conveying position of the glass sheet thereafter is calculated by using a pulse generator 44.

Accordingly, by the bending apparatus 10 of this Example, it is possible to accurately obtain a position information of a glass sheet that has been conveyed into the forming apparatus 14, it is possible to accurately obtain the timing of conveyance of glass sheet to each of the conveying rollers 30, and it is possible to obtain information necessary to form a curved plane by moving up and down each of the conveying rollers 30 at an appropriate timing and to move the curved plane in the conveying direction. Accordingly, for each model of glass sheet on the roller conveyer 20, it is possible to accurately control the placed position of the glass sheet on the curved plane, and to move each of the conveying rollers 30 at an appropriate timing with an appropriate moving amount in accordance with the conveying position.

Accordingly, by the bending apparatus 10 of this Example, it is possible to prevent occurrence of deviation of the bending position in a glass sheet from a desired bending position due to misagreement between conveyance of the glass sheet and the bending operation, and to realize bending of the glass sheet with high accuracy. Particularly, even when a glass sheet is designated to be formed into a curved plane having a plurality of curvature radiuses along the conveying direction, it is possible to form the glass sheet with high accuracy.

Further, by the bending apparatus 10 of this Example, since entry of a glass sheet to the predetermined detection position is detected by the optoelectric sensor 42, and calculation of the conveying position of the glass sheet is performed by using the pulse generator 44, it is possible to simplify acquisition of position information of the glass sheet and control of each of the conveying rollers 30. Further, since a start timing of up-down movement of each of the conveying rollers 30 after the entry into the predetermined detection position, is memorized in the main memory device 46 in advance and the start timing is read out at an appropriate timing for use, it is unnecessary to calculate the start timing at each time when a glass sheet is detected at the predetermined detection position. As a result, it is possible to simplify the control system while maintaining a high forming accuracy.

Further, in the bending apparatus 10 of this Example, even when a plurality of glass sheets are conveyed into the forming apparatus 14 continuously and they are present in the conveying apparatus 14 at the same time, it is possible to form respective predetermined curved planes corresponding to these glass sheets by carrying out up-down movement of each of the conveying roller 30 independently.

Specifically, at each time when a glass sheet is detected at the predetermined detection position, a start address to start up-down movement of each of the conveying rollers 30 is calculated, and is buffer-memorized for each of glass sheets for which a start address is detected. Then, for each of the conveying rollers 30, a start address corresponding to the first glass sheet entered into the predetermined detection position is read out, up-down movement of each of the conveying rollers 30 is started at an appropriate timing, and the up-down movement is carried out according to an operation pattern. Then, when the up-down movement is completed, a start address corresponding to the next glass sheet entered into the predetermined detection position is read out, and control for moving up and down each of the conveying rollers 30 is repeated in the same manner one after another.

In this construction, even in a case where forming of a plurality of glass sheets are carried out continuously in such a manner that before a glass sheet that has entered into the predetermined detection position reaches the final stage of the forming apparatus 14, that is before forming of the glass sheet is completed, a new glass sheet enters into the predetermined detection position and forming of the glass sheet is started, it is possible to carry out up-down movement of each of the conveying rollers 30 in accordance with each of the glass sheets by a simple control system, since start addresses based on pulse counter values calculated regularly along with conveyance of glass sheets are buffer-memorized. Accordingly, by the bending apparatus 10 of this Example, it is possible to realize bending of all of a plurality of glass sheets being conveyed with high accuracy.

Here, in the above Example, the roller conveyer 20 corresponds to "roller conveyer" described in the Claims, the servo motor 36 corresponds to "roller-driving means" described in Claims, the main memory means 46 corresponds to "memory means" described in Claims, and sub memory means 48 corresponds to "buffer memory means" described in Claims.

Further, in the above Example, the "glass-position-detecting means" described in Claims is realized by configuring the controller 40 to use the optoelectric sensor 42 and the pulse generator 44 to detect the position of a glass sheet on the roller conveyor; the "entry-detecting means" described in Claims is realized by configuring the controller 40 to detect entry of a glass sheet into the predetermined detection position based on output signals of the optoelectric sensor 42; the "counter" described in Claims is realized by configuring the controller 40 to count the number of pulses based on pulse signals output from the pulse generator 44 after entry into the predetermined detection position; the "position information-calculating means" described in Claims is realized by configuring the controller 40 to calculate a conveying distance of a glass sheet from its predetermined detection position based on the counter value; and the "start-address-calculating means" described in Claims is realized by configuring the controller 40 to calculate a start address to start up-down movement based on the start timing and the counter value for each of the conveying rollers 30.

Further, the "controlling means" described in Claims is realized by configuring the controller 40 to control up-down movement of each of the conveying rollers by using a servomotor 36 so as to form on a conveying plane a predetermined curved plane for bending a glass sheet in accordance with the position of the glass sheet, based on the position of the glass sheet on a roller conveyor; the "operation timing-controlling means" described in Claims is realized by configuring the controller 40 to start up-down movement of each of the conveying rollers 30 by using a servomotor 36 when the conveying distance of the glass sheet from the predetermined detection position agrees with the start timing memorized in a sub memory device 48; and the "operation pattern controlling means" described in Claims is realized by configuring the controller 40 to carry out up-down movement of each of the conveying rollers 30 movable up and down according to the corresponding operation pattern memorized in the main memory device 46 after start of its up-down movement.

By the way, in the above Example, an optoelectric sensor 42 is employed for detecting entry of a glass sheet to the predetermined detection position in the forming apparatus 14, but the present invention is not limited thereto, and a non-contact type sensor, image recognition by a camera, etc. may be used as an alternative.

Further, in the above Example, the optoelectric sensor 42 for detecting entry of a glass sheet to the predetermined detection position in the forming apparatus 14 is disposed in the vicinity of the border between the heating furnace 12 and the forming apparatus 14, specifically, at a predetermined detection position on the upstream side of the positions of the conveying rollers 30 movable up and down, but it is preferred to dispose the optoelectric sensor 42 at a position close to the positions of the conveying rollers 30 movable up and down as much as possible.

This is because in such a construction, the distance from the position at which the glass sheet is detected by the optoelectric sensor 42 to reach the conveying rollers 30 movable up and down, becomes short, and thereby the position detection accuracy of the glass sheet becomes high.

Further, in order to detect entry of a glass sheet into the predetermined detection position by using the optoelectric sensor 42, a rear end of the glass sheet, that is a falling edge from presence to absence of the glass sheet, may be detected.

Further, in the above Example, the construction is configured so that the number of glass sheets bendable in the forming apparatus 14 at the same time is three and that data for the above number of glass sheets can be buffer-memorized in the sub memory device 48, but the construction may be such that the number of glass sheets may be two or at least four and that data for the above number of glass sheets can be buffer-memorized in the sub memory device 48. Of course, it is possible to bend a single glass sheet.

Further, in the above Example, the apparatus is configured so that each of the conveying rollers 30 first moves down and thereafter moves up to form a downwardly convex curved plane on the conveying plane and to move the curved plane in the conveying direction, but the construction may be such that each of the conveying rollers 30 first moves up and thereafter moves down to form an upwardly convex curved plane on the conveying plane and to move the curved plane in the conveying direction.

### INDUSTRIAL APPLICABILITY

The present invention is applicable to bending of various types of glass sheets to be used for automobiles, vehicles and industry applications.

## Claims

1. A bending apparatus for a glass sheet comprising a roller conveyer having a plurality of conveying rollers for conveying a glass sheet heated by a heating furnace in a conveying direction; and a roller-driving means for moving each of the conveying rollers up and down in a direction perpendicular to the conveying direction to form a predetermined curved plane on a conveying plane defined by the plurality of conveying rollers and moving the curved plane in the conveying direction along with movement of the glass sheet in the conveying direction so as to bend the glass sheet along the conveying direction;
wherein the bending apparatus for a glass sheet further comprises a glass-position-detecting means for detecting a position information of the glass sheet on the roller conveyer; and a controlling means for controlling the up-down movement of each of the conveying rollers by the roller-driving means in accordance with the position information detected by the glass-position-detecting means so as to form a predetermined curved plane on the conveying plane in accordance with the position of the glass sheet.

2. The bending apparatus for a glass sheet according to Claim 1, wherein the glass-position-detecting means comprises an entry-detecting means for detecting entry of the glass sheet into a predetermined detection position located on the upstream side of a forming position on the roller conveyer where the up-down movement of each of the conveying rollers is carried out by the roller-driving means; and
a position-information-calculating means for calculating a position information of the glass sheet;
wherein the controlling means controls the up-down movement of each of the conveying rollers by the roller-driving means in accordance with the position information calculated by the position-information-calculating means so as to form a predetermined curved plane in accordance with a timing at which the glass sheet arrives at each of the conveying rollers.

3. The bending apparatus for a glass sheet according to Claim 2, which further comprises a memory means for memorizing a start timing of the up-down movement and an operation pattern of the up-down movement based on a distance information from the predetermined detection position for each of the conveying rollers; wherein the controlling means comprises an operation-timing-controlling means for starting the up-down movement of each of the conveying rollers by the roller-driving means when the position information calculated by the position-information-calculating means agrees with the start timing memorized in the memory means; and an operation-pattern-controlling means for carrying out the up-down movement of each of the conveying rollers by the roller-driving means according to the operation pattern memorized in the memory means.

4. The bending apparatus for a glass sheet according to Claim 3, which further comprises a counter for counting a counter value regularly in accordance with the conveyance of the glass sheet; a start-address-calculating means for calculating a start address for starting the up-down movement of each of the conveying rollers by the roller-driving means in accordance with the start timing memorized in the memory means and the counter value counted by the counter; and
a buffer memory means for buffer-memorizing the start address of each of the conveying rollers calculated by the start-address-calculating means at each time when an entry of a glass sheet into the predetermined detection position is detected by the entry-detecting means so that the start addresses are buffer-memorized in the order of glass sheets entered into the predetermined detection position so that the start addresses correspond to the respective glass sheets;
wherein the operation-timing-controlling means reads out the start addresses of the respective conveying rollers in the order that they have been buffer-memorized in the buffer memory means, and instructs the roller-driving means to start the up-down movement at each time when the counter value by the counter agrees with the start address.

5. The bending apparatus for a glass sheet according to any one of Claims 1 to 4, which further comprises an angular speed controlling means for controlling the angular speed of each of the conveying rollers according to the up-down position of the conveying roller so that horizontal components of conveying speeds of all of the conveying rollers become equal.

6. A bending method for a glass sheet comprising conveying a heated glass sheet by a roller conveyor having a plurality of conveying rollers; forming a predetermined curved plane on a conveying plane defined by the plurality of conveying rollers by moving up and down each of the conveying rollers in a direction perpendicular to the conveying direction during the conveyance; and moving the curved plane in the conveying direction along with movement of the glass sheet so that the glass sheet is positioned on the curved plane, thereby to bend the glass sheet along the conveying direction by its own weight;
the method further comprising a glass-position-detecting step of detecting a position information of the glass sheet on the roller conveyor; and a controlling step of controlling up-down movement of each of the conveying rollers in accordance with the position information detected in the glass-position-detecting step so as to form a predetermined curved plane on the conveying plane in accordance with the position of the glass sheet.

7. The bending method for a glass sheet according to Claim 6, wherein the glass-position-detecting step comprises an entry-detecting step of detecting entry of the glass sheet into a predetermined detection position located on the upstream side of a forming position on the roller conveyor where the up-down movement of each of the conveying rollers is carried out, and a position-information-calculating step of calculating a position information of the glass sheet; and
wherein the controlling step comprises controlling the up-down movement of each of the conveying rollers in accordance with the position information calculated in the position-information-calculating step so as to form a predetermined curved plane on the conveying plane in accordance with a timing at which the glass sheet arrives at each of the conveying rollers.

8. The bending method for a glass sheet according to Claim 7, which further comprises an inputting step of preliminarily memorizing in a memory means a start timing of the up and down movement and an operation pattern of the up-down movement for each of the conveying rollers based on a distance information from the predetermined detection position,
wherein the controlling step comprises an operation-timing-controlling step of starting the up-down movement of each of the conveying rollers when the position information calculated by the position-information-calculating step agrees with the start timing memorized in the memory means, and an operation pattern controlling step of carrying out the up-down movement of each of the conveying rollers according to the operation pattern memorized in the memory means.

9. The bending method for a glass sheet according to Claim 8, which further comprises a counting step of counting a counter value regularly in accordance with conveyance of the glass sheet; a start-address-calculating step of calculating a start address for starting the up-down movement of each of the conveying rollers based on the start timing memorized in the memory means and the counter value counted in the counting step; and
a buffer-memorizing step of buffer-memorizing the start address of each of the conveying rollers calculated in the start-address-calculating step at each time when an entry of a glass sheet into the predetermined detection position is detected in the entry-detecting step so that the start addresses are buffer-memorized in the order of glass sheets entered into the predetermined detection position so that the start addresses correspond to the respective glass sheets;
wherein the operation timing-controlling step comprises reading out the start addresses of the respective conveying rollers in the order that they have been buffer-memorized in the buffer memory means, and starting the up-down movement of each of the conveying rollers at each time when the counter value counted in the counting step agrees with the start address.

10. The bending method for a glass sheet according to any one of Claims 6 to 9, wherein the angular speed of each of the conveying rollers is controlled according to the up-down position of the conveying roller so that horizontal components of the conveying speeds of all of the conveying rollers become equal.

## Patentansprüche

1. Eine Vorrichtung zum Biegen einer Glasscheibe, die einen Rollenförderer umfasst, der eine Vielzahl an Transportwalzen aufweist, um eine durch einen Wärmeofen aufgeheizte Glasscheibe in eine Transportrichtung zu transportieren, und ein Walzenantriebsmittel, um jede einzelne der Transportwalzen nach oben und nach unten in eine Richtung zu bewegen, die senkrecht zur Transportrichtung liegt, um eine vorbestimmte gekrümmte Ebene auf der Transportebene zu bilden, die durch die Vielzahl an Transportwalzen definiert wird und die gekrümmte Ebene in die Transportrichtung einhergehend mit der Bewegung der Glasscheibe in die Transportrichtung zu bewegen, sodass die Glasscheibe entlang der Transportrichtung gebogen wird;
wobei die Vorrichtung zum Biegen einer Glasscheibe des Weiteren ein Scheibenpositionserfassungsmittel umfasst, um eine Positionsinformation der Glasscheibe auf dem Rollenförderer zu erfassen; und ein Steuermittel, um die Auf- und Ab-Bewegung von jeder der Transportwalzen durch das Walzenantriebsmittel entsprechend der durch das Scheibenpositionserfassungsmittel erfasste Positionsinformation zu steuern, sodass auf der Transportebene, entsprechend der Position der Glasscheibe, eine vorbestimmte gekrümmte Fläche gebildet wird.

2. Die Vorrichtung zum Biegen einer Glasscheibe nach Anspruch 1, wobei das Scheibenpositionserfassungsmittel ein Eintrittserfassungsmittel umfasst, um den Eintritt der Glasscheibe in eine vorbestimmte Erfassungsposition zu erfassen, die sich auf der vorgelagerten Seite einer Bildungsposition auf dem Walzenförderer befindet, wo die Auf-Ab Bewegung jeder Transportwalze durch das Walzenantriebsmittel ausgeführt wird; und
ein Positionsinformations-Berechnungsmittel, um eine Positionsinformation der Glasscheibe zu berechnen;
wobei das Steuermittel die Auf-Ab Bewegung von jeder der Transportwalzen durch das Walzenantriebsmittel entsprechend der durch das Positionsinformations-Berechnungsmittel berechneten Positionsinformation steuert, sodass eine vorbestimmte gekrümmte Ebene entsprechend eines Zeitablaufs bzw. Zeitpunktes gebildet wird, an dem die Glasscheibe an jeder der Transportwalzen ankommt.

3. Die Vorrichtung zum Biegen einer Glasscheibe nach Anspruch 2, die des Weiteren ein Speichermittel umfasst, um einen Start des Zeitablaufs der Auf-Ab Bewegung und eine Struktur des Vorgangs der Auf-Ab Bewegung zu speichern basierend auf einer Information zur Entfernung von der vorbestimmten Erfassungsposition für jede der Transportwalzen; wobei das Steuermittel ein Vorgangszeitverlaufs-Steuerungsmittel umfasst, um die Auf-Ab Bewegung jeder der Transportwalzen durch das Walzenantriebsmittel zu starten, wenn die durch das Positionsinformations-Berechnungsmittel berechnete Positionsinformation mit dem im Speichermittel gespeicherten Start des Zeitablaufs übereinstimmt; und ein Vorgangsstruktur-Steuermittel, um die Auf-Ab Bewegung jeder der Transportwalzen durch das Walzenantriebsmittel entsprechend der im Speichermittel gespeicherten Vorgangsstruktur auszuführen.

4. Die Vorrichtung zum Biegen einer Glasscheibe nach Anspruch 3, die des Weiteren einen Zähler umfasst, um einen Zählwert entsprechend der Beförderung der Glasscheibe regelmäßig zu zählen; ein Startadressen-Berechnungsmittel, um eine Startadresse zum Start der Auf-Ab Bewegung jeder der Transportwalzen durch das Walzenantriebsmittel entsprechend dem im Speichermittel gespeicherten Start des Zeitablaufs und dem durch den Zähler gezählten Zählwert zu berechnen; und
ein Puffer- bzw. Zwischenspeichermittel, um die durch das Startadressen-Berechnungsmittel berechnete Startadresse jeder der Transportwalzen, jedes mal zwischenzuspeichern, wenn der Eintritt einer Glasscheibe in die vorbestimmte Erfassungsposition durch das Eintrittserfassungsmittel erfasst wird, sodass die Startadressen in der Reihenfolge zwischengespeichert werden, in der die Glasscheiben in die vorbestimmte Erfassungsposition geraten, sodass die Startadressen den einzelnen Glasscheiben entsprechen;
wobei das Vorgangszeitverlaufs-Steuerungsmittel die Startadressen der jeweiligen Transportwalzen in der Reihenfolge ausliest, in der sie im Zwischenspeichermittel zwischengespeichert worden sind, und das Walzenantriebsmittel anweist, die Auf-Ab Bewegung jedes Mal zu starten, wenn der Zählwert vom Zähler der Startadresse zustimmt.

5. Die Vorrichtung zum Biegen einer Glasscheibe nach einem der Ansprüche von 1 bis 4, die des Weiteren ein Winkelgeschwindigkeits-Steuermittel umfasst, um die Winkelgeschwindigkeit jeder der Transportwalzen entsprechend der Auf-Ab Position der Transportwalzen zu steuern, sodass die horizontalen Komponenten der Transportgeschwindigkeiten aller Transportwalzen gleich werden.

6. Ein Verfahren zum Biegen einer Glasscheibe, das Folgendes umfasst:
transportieren einer aufgeheizten Glasscheibe durch einen Rollenförderer, der eine Vielzahl an Transportwalzen aufweist; bilden einer vorbestimmten gekrümmten Ebene auf der Transportebene, die durch die Vielzahl an Transportwalzen definiert wird, indem jede der Transportwalzen während des Transports in einer Auf- und AbRichtung bewegt wird, die zur Transportrichtung senkrecht liegt; und bewegen der gekrümmten Ebene in die Transportrichtung einhergehend mit der Bewegung der Glasscheibe, sodass die Glasscheibe auf der gekrümmten Ebene positioniert ist, und dadurch entlang der Transportrichtung durch das eigene Gewicht gebogen wird;
wobei das Verfahren des Weiteren einen Scheibenpositionserfassungsschritt umfasst, um eine Positionsinformation der Glasscheibe auf dem Rollenförderer zu erfassen; und einen Steuerschritt, um einen Auf-Ab Bewegung von jeder der Transportwalzen entsprechend der im Scheibenpositionserfassungsschritt erfassten Positionsinformation zu steuern, sodass auf der Transportebene, entsprechend der Position der Glasscheibe, eine vorbestimmte gekrümmte Fläche gebildet wird.

7. Das Verfahren zum Biegen einer Glasscheibe nach Anspruch 6, wobei der Scheibenpositionserfassungsschritt einen Eintrittserfassungsschritt umfasst, um den Eintritt der Glasscheibe in eine vorbestimmte Erfassungsposition zu erfassen, die sich auf der vorgelagerten Seite einer Bildungsposition auf dem Walzenförderer befindet, wo die Auf-Ab Bewegung jeder Transportwalze ausgeführt wird, und ein Positionsinformations-Berechnungsschritt, um eine Positionsinformation der Glasscheibe zu berechnen; und
wobei der Steuerschritt Folgendes umfasst: steuern der Auf-Ab Bewegung von jeder der Transportwalzen entsprechend der im Positionsinformations-Berechnungsschritt berechneten Positionsinformation, sodass auf der Transportebene eine vorbestimmte gekrümmte Ebene entsprechend eines Zeitablaufs bzw. Zeitpunktes gebildet wird, an dem die Glasscheibe an jeder der Transportwalzen ankommt.

8. Das Verfahren zum Biegen einer Glasscheibe nach Anspruch 7, das des Weiteren einen Eingabeschritt zur vorläufigen Speicherung in einem Speichermittel eines Starts des Zeitablaufs der Auf-Ab Bewegung und einer Struktur des Vorgangs der Auf-Ab Bewegung für jede der Transportwalzen umfasst, basierend auf einer Entfernungsinformation von der vorbestimmten Erfassungsposition,
wobei der Steuerschritt einen Vorgangszeitverlaufs-Steuerungsschritt umfasst, um die Auf-Ab Bewegung jeder der Transportwalzen zu starten, wenn die durch den Positionsinformations-Berechnungsschritt berechnete Positionsinformation mit dem im Speichermittel gespeicherten Start des Zeitablaufs übereinstimmt, und einen Vorgangsstruktur-Steuerschritt, um die Auf-Ab Bewegung jeder der Transportwalzen entsprechend der im Speichermittel gespeicherten Vorgangsstruktur auszuführen.

9. Das Verfahren zum Biegen einer Glasscheibe nach Anspruch 8, das des Weiteren einen Zählschritt umfasst, um einen Zählwert entsprechend der Beförderung der Glasscheibe regelmäßig zu zählen; einen Startadressen-Berechnungsschritt, um eine Startadresse zum Start der Auf-Ab Bewegung jeder der Transportwalzen entsprechend dem im Speichermittel gespeicherten Start des Zeitablaufs und dem im Zählschritt gezählten Zählwert zu berechnen; und
ein Puffer- bzw. Zwischenspeicherschritt, um die im Startadressen-Berechnungsschritt berechnete Startadresse jeder der Transportwalzen jedes Mal zwischenzuspeichern, wenn der Eintritt einer Glasscheibe in die vorbestimmte Erfassungsposition im Eintrittserfassungsschritt erfasst wird, sodass die Startadressen in der Reihenfolge zwischengespeichert werden, in der die Glasscheiben in die vorbestimmte Erfassungsposition geraten, sodass die Startadressen den einzelnen Glasscheiben entsprechen;
wobei der Vorgangszeitverlaufs-Steuerungsschritt Folgendes umfasst: auslesen der Startadressen der jeweiligen Transportwalzen in der Reihenfolge, in der sie im Zwischenspeichermittel zwischengespeichert worden sind, und starten der Auf-Ab Bewegung jeder der Transportwalzen, jedes Mal, wenn der im Zählschritt gezählte Zählwert mit der Startadresse übereinstimmt.

10. Das Verfahren zum Biegen einer Glasscheibe nach einem der Ansprüche von 6 bis 9, wobei die Winkelgeschwindigkeit jeder der Transportwalzen entsprechend der Auf-Ab Position der Transportwalzen gesteuert wird, sodass die horizontalen Komponenten der Transportgeschwindigkeiten aller Transportwalzen gleich werden.

## Revendications

1. Un dispositif de cintrage pour une feuille en verre, comprenant un convoyeur à rouleaux qui présente une pluralité de rouleaux de transport pour transporter une feuille en verre chauffée par une fournaise de chauffage dans une direction de transport ; et un moyen d'entraînement de rouleau pour déplacer chacun des rouleaux de transport vers le haut et vers le bas dans une direction perpendiculaire par rapport à la direction de transport pour former sur un plan de transport un plan incurvé prédéterminé défini par la pluralité de rouleaux de transport et pour déplacer le plan incurvé dans la direction de transport avec le mouvement de la feuille en verre en direction de transport de manière à cintrer la feuille en verre tout au long de la direction de transport ;
sachant que le dispositif de cintrage pour une feuille en verre comprend en outre un moyen de détection de position de verre pour détecter une information relative à la position de la feuille en verre sur le convoyeur à rouleaux ; et un moyen de commande pour commander le mouvement vers le haut et vers le bas de chacun des rouleaux de transport par le moyen d'entraînement de rouleau conformément à l'information relative à la position détectée par le moyen de détection de position de verre de manière à former un plan incurvé prédéterminé sur le plan de transport conformément à la position de la feuille en verre.

2. Le dispositif de cintrage pour une feuille en verre d'après la revendication 1, sachant que le moyen de détection de position de verre comprend un moyen de détection d'entrée pour détecter l'entrée de la feuille en verre dans une position de détection prédéterminée située en amont de la position de formation sur le convoyeur à rouleaux où le mouvement haut-bas de chacun des rouleaux de transport est effectué par le moyen d'entraînement de rouleau ; et
un moyen de calcul d'information relative à la position pour calculer une information de la feuille en verre relative à la position ;
sachant que le moyen de commande commande le mouvement haut-bas de chacun des rouleaux de transport par le moyen d'entraînement de rouleau conformément à l'information relative à la position calculée par le moyen de calcul d'information relative à la position de manière à former un plan incurvé prédéterminé conformément à la temporisation (*timing*) selon laquelle la feuille en verre arrive à chacun des rouleaux de transport.

3. Le dispositif de cintrage pour une feuille en verre d'après la revendication 2, comprenant en outre un moyen de mémorisation pour mémoriser une temporisation de départ du mouvement haut-bas et un schéma opérationnel du mouvement haut-bas en se basant sur une information relative à la distance à partir de la position de détection prédéterminée pour chacun des rouleaux de transport ; sachant que le moyen de commande comprend un moyen de commande de temporisation d'opération pour débuter le mouvement haut-bas de chacun des rouleaux de transport par le moyen d'entraînement de rouleau quand l'information relative à la position calculée par le moyen de calcul d'information relative à la position concorde avec la temporisation de départ mémorisée dans le moyen de mémorisation ; et un moyen de commande de schéma opérationnel pour réaliser le mouvement haut-bas de chacun des rouleaux de transport par le moyen d'entraînement de rouleau conformément au schéma opérationnel mémorisé dans le moyen de mémorisation.

4. Le dispositif de cintrage pour une feuille en verre d'après la revendication 3, comprenant en outre un compteur pour compter une valeur de compteur régulièrement conformément au transport de la feuille en verre ; un moyen de calcul d'adresse de départ pour calculer une adresse de départ pour démarrer le mouvement haut-bas de chacun des rouleaux de transport par le moyen d'entraînement de rouleau conformément à la temporisation de départ mémorisée dans le moyen de mémorisation et à la valeur de compteur comptée par le compteur ; et
un moyen mémoire tampon pour mémoriser temporairement (*buffer-memorizing*) l'adresse de départ de chacun des rouleaux de transport calculée par le moyen de calcul d'adresse de départ chaque fois qu'une entrée de feuille en verre dans la position de détection prédéterminée est détectée par le moyen de détection d'entrée, de manière que les adresses de départ sont mémorisées temporairement dans l'ordre d'entrée des feuilles en verre dans la position prédéterminée de détection, de manière que les adresses de départ correspondent aux feuilles en verre respectives ;
sachant que le moyen de commande de temporisation d'opération effectue une lecture des adresses de départ des rouleaux de transport respectifs dans l'ordre dans lequel ils ont été mémorisés temporairement dans le moyen mémoire tampon, et ordonne au moyen d'entraînement de rouleau de commencer le mouvement haut-bas chaque fois que la valeur de compteur par le compteur concorde avec l'adresse de départ.

5. Le dispositif de cintrage pour une feuille en verre d'après une des revendications de 1 à 4, qui comprend en outre un moyen de commande de vitesse angulaire pour commander la vitesse angulaire de chacun des rouleaux de transport conformément à la position haut-bas du rouleau de transport de manière que les composantes horizontales des vitesses de transport de tous les rouleaux de transport deviennent identiques.

6. Un procédé de cintrage pour une feuille en verre comprenant le fait de transporter une feuille en verre chauffée par un convoyeur à rouleaux qui présente une pluralité de rouleaux de transport ; former sur un plan de transport un plan incurvé prédéterminé défini par la pluralité de rouleaux de transport en déplaçant pendant le transport chacun des rouleaux de transport vers le haut et vers le bas dans une direction perpendiculaire par rapport à la direction de transport ; et déplacer le plan incurvé dans la direction de transport en conjonction avec le mouvement de la feuille en verre de manière que la feuille en verre soit positionnée sur le plan incurvé, ce qui cintre la feuille en verre au long de la direction de transport par son propre poids ;
le procédé comprenant en outre une étape de détection de position de verre consistant à détecter une information relative à la position de la feuille en verre sur le convoyeur à rouleaux ; et une étape de commande consistant à commander le mouvement vers le haut et vers le bas de chacun des rouleaux de transport de rouleau conformément à l'information relative à la position détectée dans l'étape de détection de position de verre de manière à former un plan incurvé prédéterminé sur le plan de transport conformément à la position de la feuille en verre.

7. Le procédé de cintrage pour une feuille en verre d'après la revendication 6, sachant que l'étape de détection de position de verre comprend une étape de détection d'entrée consistant à détecter l'entrée de la feuille en verre dans une position de détection prédéterminée située en amont d'une position de formation sur le convoyeur à rouleaux où le mouvement haut-bas de chacun des rouleaux de transport est effectué, et une étape de calcul d'information relative à la position consistant à calculer une information de la feuille en verre relative à la position ; et
sachant que l'étape de commande comprend le fait de commander le mouvement haut-bas de chacun des rouleaux de transport conformément à l'information relative à la position calculée dans l'étape de calcul d'information relative à la position de manière à former sur le plan de transport un plan incurvé prédéterminé conformément à une temporisation (*timing*) selon laquelle la feuille en verre arrive à chacun des rouleaux de transport.

8. Le procédé de cintrage pour une feuille en verre d'après la revendication 7, qui comprend en outre une étape d'entrée consistant à mémoriser dans un moyen de mémorisation de manière préliminaire une temporisation de départ du mouvement haut-bas et un schéma opérationnel du mouvement haut-bas pour chacun des rouleaux de transport en se basant sur une information relative à la distance à partir de la position de détection prédéterminée,
sachant que l'étape de commande comprend une étape de commande de temporisation d'opération consistant à débuter le mouvement haut-bas de chacun des rouleaux de transport quand l'information relative à la position calculée par l'étape de calcul d'information relative à la position concorde avec la temporisation de départ mémorisée dans le moyen de mémorisation, et une étape de commande de schéma opérationnel consistant à réaliser le mouvement haut-bas de chacun des rouleaux de transport conformément au schéma opérationnel mémorisé dans le moyen de mémorisation.

9. Le procédé de cintrage pour une feuille en verre d'après la revendication 8, qui comprend en outre une étape de comptage consistant à compter une valeur de compteur régulièrement conformément au transport de la feuille en verre ; une étape de calcul d'adresse de départ consistant à calculer une adresse de départ pour démarrer le mouvement haut-bas de chacun des rouleaux de transport conformément à la temporisation de départ mémorisée dans le moyen de mémorisation et à la valeur de compteur comptée par le compteur ; et
une étape mémoire tampon consistant à mémoriser temporairement (*buffer-memorizing*) l'adresse de départ de chacun des rouleaux de transport calculée dans l'étape de calcul d'adresse de départ chaque fois qu'une entrée de feuille en verre dans la position de détection prédéterminée est détectée dans l'étape de détection d'entrée, de manière que les adresses de départ sont mémorisées temporairement dans l'ordre d'entrée des feuilles en verre dans la position prédéterminée de détection, de manière que les adresses de départ correspondent aux feuilles en verre respectives ;
sachant que l'étape de commande de temporisation d'opération comprend le fait d'effectuer une lecture des adresses de départ des rouleaux de transport respectifs dans l'ordre dans lequel ils ont été mémorisés temporairement dans le moyen mémoire tampon, et le fait de débuter le mouvement haut-bas de chacun des rouleaux de transport chaque fois que la valeur de compteur comptée dans l'étape de comptage concorde avec l'adresse de départ.

10. Le procédé de cintrage pour une feuille en verre d'après une des revendications de 6 à 9, sachant que la vitesse angulaire de chacun des rouleaux de transport est commandée conformément à la position haut-bas du rouleau de transport, de manière que les composantes horizontales des vitesses de transport de tous les rouleaux de transport deviennent identiques.
